# EUROPEAN PATENT APPLICATION

(11) **EP 4 665 082 A2**
(43) Date of publication of application: **17.12.2025**
(21) Application number: 25203760.1
(22) Date of filing: 12.04.2021
(51) Int. Cl.: H04W 88/04

(54) **INFORMATION TRANSMISSION METHOD, DEVICE AND COMPUTER READABLE STORAGE MEDIUM**

(30) Priority: 20.04.2020 CN 202010315891
(62) Divisional of application: 21792422.4
(71) Applicant: Datang Mobile Communications Equipment Co., Ltd., Beijing 100085 (CN)
(72) Inventor: ZHAO, Yali, Beijing, 100083 (CN); WANG, Da, Beijing, 100083 (CN)
(74) Representative: dompatent

(57) **Abstract**

Embodiments of the present disclosure provide an information transmission method, device and a computer readable storage medium. The method includes: establishing an end-to-end adaptation layer in an L2 relay scenario; a function of the adaptation layer includes one or a combination: routing, bearer mapping.

## Description

### TECHNICAL FIELD

The present disclosure relates to the field of communications technology, in particular to an information transmission method, device and a computer readable storage medium.

### BACKGROUND

In order to expand network coverage, Layer 2 (L2) relays can be considered. The L2 relay may be a terminal with a relay function.

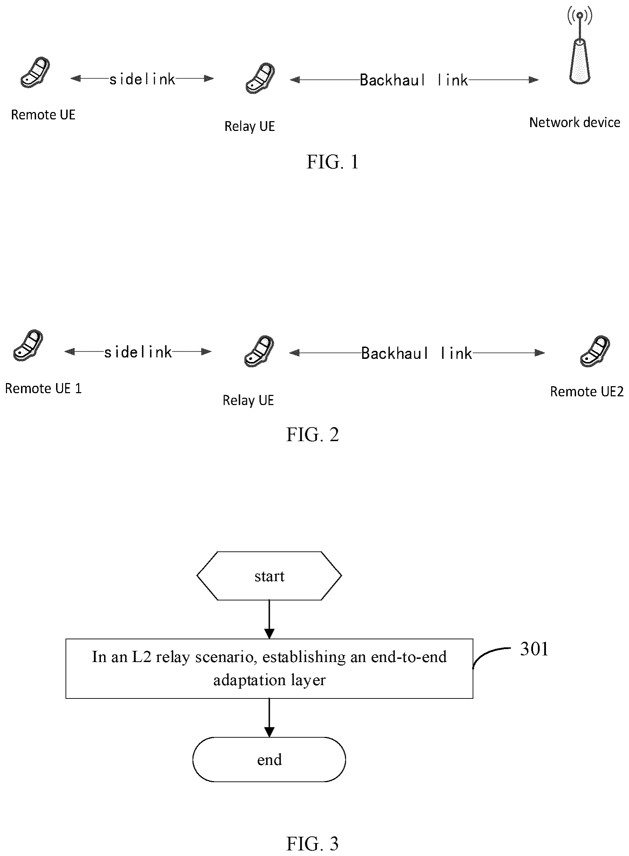

A schematic diagram of UE-to-Network Relay is shown in FIG. 1. For UE-to-Network Relay, the interface between the L2 relay and the network is a Uu interface, and the interface between the L2 relay and the relayed User Equipment (UE) (or called a remote UE) is a direct communication interface (Sidelink interface or PCS interface). The link between the L2 relay and the network may be referred to as a backhaul link for the remote UE.

A schematic diagram of UE-to-UE Relay is shown in FIG. 2. For UE-to-UE relay, the interfaces between the L2 relay and the remote UE are all sidelink interfaces.

The bearer in the L2 relay scenario is divided into three types:
(1) Sidelink interface bearer: that is, the bearer between the remote UE and the relay UE;
(2) The end-to-end bearer between the remote UE and the network device: that is, the end-to-end bearer established between the remote end and the network device;
(3) Bearer of the remote UE on the backhaul link of the Uu interface: that is, the bearer used to bearer the data of the remote UE between the relay UE and the network device.

Regardless of the type of bearer, the bearers and the logical channels are in oneto-one correspondence, and the logical channel has a corresponding logical channel identifier.

At present, in the L2 relay scenario, there is no solution on how to design the adaptation layer.

### SUMMARY

Embodiments of the present disclosure provide an information transmission method, device, apparatus and a computer readable storage medium, so that in in the L2 relay scenario, data transmission between the remote UE and the network device or between two remote UEs can be normally performed.

In a first aspect, an embodiment of the present disclosure provide an information transmission method, includes an information transmission method, including: in a layer 2 (L2) relay scenario, establishing an end-to-end adaptation layer; wherein, a function of the end-to-end adaptation layer includes one or a combination of routing and bearer mapping.

In an embodiment of the present disclosure, the method includes: for a UE-to-Network relay scenario, a protocol data unit (PDU) header of an adaptation layer PDU at least including: a bearer identifier of a remote UE on a sidelink interface, or an identifier of an end-to-end bearer between the remote UE and a network device allocated by the network device to the remote UE; for a UE-to-UE relay scenario, the PDU header of the adaptation layer PDU at least including: end-to-end bearer identifiers of a first remote UE and a second remote UE on the sidelink interface.

In an embodiment of the present disclosure, the bearer identifier of the remote UE on the sidelink interface includes: a sidelink interface source L2 ID, a sidelink interface destination L2 ID, and a sidelink interface logical channel identifier; or, the bearer identifier of the remote UE on the sidelink interface includes: the sidelink interface source L2 ID, the sidelink interface destination L2 ID, and a sidelink interface bearer identifier; the end-to-end bearer identifiers of the first remote UE and the second remote UE on the sidelink interface include: the sidelink interface source L2 ID, the sidelink interface destination L2 ID, and the sidelink interface logical channel identifier; or, the end-to-end bearer identifiers of the first remote UE and the second remote UE on the sidelink interface include: the sidelink interface source L2 ID, the sidelink interface destination L2 ID, and the sidelink interface bearer identifier.

In an embodiment of the present disclosure, the PDU header of the adaptation layer PDU further comprises a sidelink interface cast type identifier.

In an embodiment of the present disclosure, the identifier of the end-to-end bearer between the remote UE and the network device allocated by the network device to the remote UE includes: UE identification information allocated by the network device to the remote UE, an end-to-end logical channel identifier between the remote UE and the network device; or, the identifier of the end-to-end bearer identifier between the remote UE and the network device allocated by the network device to the remote UE includes: the UE identification information allocated by the network device to the remote UE, an end-to-end bearer identifier between the remote UE and the network device.

In an embodiment of the present disclosure, for a UE-to-Network relay scenario, the establishing an end-to-end adaptation layer includes: establishing the end-to-end adaptation layer between the remote UE and the network device; or, establishing the end-to-end adaptation layer between a relay UE and the network device.

In an embodiment of the present disclosure, the establishing the end-to-end adaptation layer between the remote UE and the network device includes: adding the end-to-end adaptation layer above a radio link control (RLC) layer of the remote UE and above an RLC layer of the network device.

In an embodiment of the present disclosure, the method further includes: if the PDU header of the adaptation layer PDU at least includes: the bearer identifier of the remote UE on the sidelink interface: in the uplink direction, generating, by the adaptation layer of the remote UE, the adaptation layer PDU, and delivering the adaptation layer PDU to a corresponding RLC entity according to a first mapping relationship; the first mapping relationship being a mapping relationship between the end-to-end bearer between the network device and the remote UE and the sidelink interface bearer of the remote UE; receiving, by the relay UE, the adaptation layer PDU, and delivering the adaptation layer PDU to an RLC entity corresponding to a Uu interface backhaul link bearer according to a second mapping relationship and the bearer identifier of the remote UE on the sidelink interface; the second mapping relationship being a mapping relationship between a sidelink interface bearer of the remote UE and a Uu interface backhaul link bearer of the remote UE; determining, by the network device, the bearer identifier of the end-to-end bearer between the remote UE and the network device corresponding to the adaptation layer PDU according to a third mapping relationship and the bearer identifier of the remote UE on the sidelink interface included in the PDU header of the adaptation layer PDU, and determining a corresponding packet data convergence protocol (PDCP) entity; the third mapping relationship being a mapping relationship between the sidelink interface bearer of the remote UE and the end-to-end bearer between the remote UE and the network device.

In an embodiment of the present disclosure, the method further includes: If the PDU header of the adaptation layer PDU at least includes: the bearer identifier of the remote UE on the sidelink interface: in the downlink direction, generating, by the adaptation layer of the network device, the adaptation layer PDU, and delivering the adaptation layer PDU to the corresponding RLC entity according to a fourth mapping relationship; the fourth mapping relationship being a mapping relationship between the end-to-end bearer between the network device and the remote UE and the Uu interface backhaul link bearer of the remote UE; receiving, by the relay UE, the adaptation layer PDU, determining a corresponding sidelink interface bearer according to the bearer identifier of the remote UE on the sidelink interface, and delivering the adaptation layer PDU to the RLC entity corresponding to the sidelink interface bearer; receiving, by the remote UE, the adaptation layer PDU, and determining the bearer identifier of the end-to-end bearer between the remote UE and the network device corresponding to the adaptation layer PDU according to a fifth mapping relationship and the bearer identifier of the remote UE on the sidelink interface included in the PDU header of the adaptation layer PDU, and determining a corresponding PDCP entity; the fifth mapping relationship being a mapping relationship between the sidelink interface bearer of the remote UE and the end-to-end bearer between the remote UE and the network device.

In an embodiment of the present disclosure, the method further includes: if the PDU header of the adaptation layer PDU at least includes: the identifier of the end-to-end bearer between the remote UE and the network device allocated by the network device to the remote UE: in the uplink direction, generating, by the adaptation layer of the remote UE, the adaptation layer PDU, and delivering the adaptation layer PDU to a corresponding RLC entity according to a sixth mapping relationship; the sixth mapping relationship being a mapping relationship between the end-to-end bearer between the network device and the remote UE and the sidelink interface bearer of the remote UE; receiving, by the relay UE, the adaptation layer PDU, and delivering the adaptation layer PDU to an RLC entity corresponding to the Uu interface backhaul link bearer according to a seventh mapping relationship; the seventh mapping relationship being a mapping relationship between the sidelink interface bearer of the remote UE and the Uu interface backhaul link bearer of the remote UE; receiving, by the network device, the adaptation layer PDU and determining the corresponding PDCP entity according to the identifier of the end-to-end bearer between the remote UE and the network device allocated by the network device to the remote UE included in the PDU header of the adaptation layer PDU.

In an embodiment of the present disclosure, the method further includes: if the PDU header of the adaptation layer PDU at least includes: the identifier of the end-to-end bearer between the remote UE and the network device allocated by the network device to the remote UE: in the downlink direction, generating, by the adaptation layer of the network device, the adaptation layer PDU, and delivering the adaptation layer PDU to the corresponding RLC entity according to an eighth mapping relationship; the eighth mapping relationship being a mapping relationship between the end-to-end bearer between the network device and the remote UE and the Uu interface backhaul link bearer of the remote UE; receiving, by the relay UE, the adaptation layer PDU, and determining the corresponding sidelink interface bearer according to the identifier of the end-to-end bearer between the remote UE and the network device allocated by the network device to the remote UE and a ninth mapping relationship, and delivering the adaptation layer PDU to the RLC entity corresponding to the sidelink interface bearer; the ninth mapping relationship being a mapping relationship between the Uu interface backhaul link bearer of the remote UE and the sidelink interface bearer of the remote UE; receiving, by the remote UE, the adaptation layer PDU, and determining the corresponding PDCP entity according to the identifier of the end-to-end bearer between the remote UE and the network device allocated by the network device to the remote UE included in the PDU header of the adaptation layer PDU.

In an embodiment of the present disclosure, the establishing the end-to-end adaptation layer between the relay UE and the network device comprises: adding the end-to-end adaptation layer above the RLC layer of the relay UE and above the RLC layer of the network devices respectively.

In an embodiment of the present disclosure, the method further includes: if the PDU header of the adaptation layer PDU at least includes: the bearer identifier of the remote UE on the sidelink interface: in the uplink direction, generating, by the remote UE, a PDCP PDU, and delivering the PDCP PDU to a corresponding RLC entity according to a tenth mapping relationship; the tenth mapping relationship being a mapping relationship between that the end-to-end bearer between the remote UE and the network device and the sidelink interface bearer of the remote UE; generating, by the relay UE, the adaptation layer PDU according to the PDCP PDU, and delivering the adaptation layer PDU to the corresponding RLC entity according to an eleventh mapping relationship; the eleventh mapping relationship being a mapping relationship between the sidelink interface bearer of the remote UE and the Uu interface backhaul link bearer of the remote UE; determining, by the network device, the bearer identifier of the end-to-end bearer between the remote UE and the network device corresponding to the adaptation layer PDU according to a twelfth mapping relationship and the bearer identifier of the remote UE on the sidelink interface included in the PDU header of the adaptation layer PDU, and determining the corresponding PDCP entity; the twelfth mapping relationship being a mapping relationship between the sidelink interface bearer of the remote UE and the end-to-end bearer between the remote UE and the network device.

In an embodiment of the present disclosure, the method further includes: if the PDU header of the adaptation layer PDU at least includes: the bearer identifier of the remote UE on the sidelink interface: in the downlink direction, generating, by the adaptation layer of the network device, the adaptation layer PDU, and delivering the adaptation layer PDU to the corresponding RLC entity according to a thirteenth mapping relationship; the thirteenth mapping relationship being a mapping relationship between the end-to-end bearer between the network device and the remote UE and the Uu interface backhaul link bearer of the remote UE; receiving, by the relay UE, the adaptation layer PDU, removing an adaptation layer header of the adaptation layer PDU, and obtaining a to-be-processed data packet; determining the corresponding sidelink interface bearer according to the bearer identifier of the remote UE on the sidelink interface, and delivering the to-be-processed data packet to the RLC entity corresponding to the sidelink interface bearer; receiving, by the remote UE, the RLC PDU, and determining the corresponding PDCP entity according to a fourteenth mapping relationship; the fourteenth mapping relationship being a mapping relationship between the sidelink interface bearer of the remote UE and the end-to-end bearer between the remote UE and the network device.

In an embodiment of the present disclosure, the method further includes: if the PDU header of the adaptation layer PDU at least includes: the identifier of the end-to-end bearer between the remote UE and the network device allocated by the network device to the remote UE: in the uplink direction, generating, by the remote UE, the PDCP PDU, and delivering the PDCP PDU to the corresponding RLC entity according to a fifteenth mapping relationship; the fifteenth mapping relationship being a mapping relationship between the end-to-end bearer between the remote UE and the network device and the sidelink interface bearer of the remote UE; generating, by the relay UE, the adaptation layer PDU according to the PDCP PDU, and delivering the adaptation layer PDU to the RLC entity corresponding to the Uu interface backhaul link bearer according to a sixteenth mapping relationship; the sixteenth mapping relationship being a mapping relationship between the sidelink interface bearer of the remote UE and the Uu interface backhaul link bearer of the remote UE; determining, by the network device, the corresponding PDCP entity according to the identifier of the end-to-end bearer between the remote UE and the network device allocated by the network device to the remote UE and contained in the PDU header of the adaptation layer PDU.

In an embodiment of the present disclosure, the method further includes: if the PDU header of the adaptation layer PDU at least includes: the identifier of the end-to-end bearer between the remote UE and the network device allocated by the network device to the remote UE: in the downlink direction, generating by the adaptation layer of the network device, the adaptation layer PDU, and delivering the adaptation layer PDU to the corresponding RLC entity according to a seventeenth mapping relationship; the seventeenth mapping relationship is a mapping relationship between the end-to-end bearer between the network device and the remote UE and the Uu interface backhaul link bearer of the remote UE; receiving, by the relay UE, the adaptation layer PDU, removing the adaptation layer header of the adaptation layer PDU, and obtaining a to-be-processed data packet; determining the sidelink interface bearer corresponding to the remote UE according to an eighteenth mapping relationship, and delivering the to-be-processed data packet to the RLC entity corresponding to the sidelink interface bearer; the eighteenth mapping relationship being a mapping relationship between the Uu interface backhaul link bearer of the remote UE and the sidelink interface bearer of the remote UE; receiving, by the remote UE, the RLC PDU, determining the corresponding PDCP entity according to a nineteenth mapping relationship; the nineteenth mapping relationship being a mapping relationship between the sidelink interface bearer of the remote UE and the end-to-end bearer between the remote UE and the network device.

In an embodiment of the present disclosure, for the UE-to-UE relay scenario, the establishing an end-to-end adaptation layer includes: establishing the end-to-end adaptation layer between the first remote UE and the second remote UE; or, establishing the end-to-end adaptation layer between the relay UE and the second remote UE.

In an embodiment of the present disclosure, the establishing the end-to-end adaptation layer between the first remote UE and the second remote UE includes: adding the end-to-end adaptation layer above the RLC layer of the first remote UE and above the RLC layer of the second remote UE respectively.

In an embodiment of the present disclosure, the method further includes: generating, by an adaptation layer of the first remote UE, an adaptation layer PDU, and determining a corresponding RLC entity when the adaptation layer PDU is transmitted between the first remote UE and the relay UE according to a twentieth mapping relationship; the twentieth mapping relationship being a mapping relationship between a sidelink end-to-end bearer between the first remote UE and the second remote UE and a sidelink interface bearer between the first remote UE and the relay UE; receiving, by the relay UE, the adaptation layer PDU, and determining the corresponding RLC entity when the adaptation layer PDU is transmitted between the relay UE and the second remote UE according to a twenty-first mapping relationship; the twenty-first mapping relationship being a mapping relationship between the sidelink interface bearer between the first remote UE and the relay UE and the sidelink interface bearer between the relay UE and the second remote UE; receiving, by the second remote UE, the adaptation layer PDU, and determining the corresponding the PDCP entity according to the end-to-end bearer identifiers of the first remote UE and the second remote UE on the sidelink interface included in the PDU header of the adaptation layer PDU.

In an embodiment of the present disclosure, the establishing the end-to-end adaptation layer between the first remote UE and the second remote UE includes: adding the end-to-end adaptation layer above the RLC layer of the relay UE and above the RLC layer of the second remote UE respectively.

In an embodiment of the present disclosure, the method further includes: generating, by the first remote UE, the PDCP PDU, and determining the RLC entity corresponding to the PDCP PDU according to a twenty-second mapping relationship; the twenty-second mapping relationship being a mapping relationship between the sidelink end-to-end bearer between the first remote UE and the second remote UE and the end-to-end bearer between the first remote UE and the relay UE; generating, by the relay UE, the adaptation layer PDU according to the PDCP PDU, and determining a corresponding RLC entity when the adaptation layer PDU is transmitted between the relay UE and the second remote UE according to a twenty-third mapping relationship; the twenty-third mapping relationship being a mapping relationship between the sidelink interface bearer between the first remote UE and the relay UE and the sidelink interface bearer between the relay UE and the second remote UE; receiving, by the second remote UE, the adaptation layer PDU, and determining the corresponding PDCP entity according to the end-to-end bearer identifiers of the first remote UE and the second remote UE on the sidelink interface included in the PDU header of the adaptation layer PDU.

In a second aspect, an embodiment of the present disclosure provides an information transmission device, includes: an establishing module, configured to establish an end-to-end adaptation layer in an L2 relay scenario; wherein, a function of the adaptation layer includes one or a combination: routing, bearer mapping.

In an embodiment of the present disclosure, for a UE-to-Network relay scenario, a protocol data unit (PDU) header of an adaptation layer PDU at least including: a bearer identifier of a remote UE on a sidelink interface, or an identifier of an end-to-end bearer between the remote UE and a network device allocated by the network device to the remote UE; for a UE-to-UE relay scenario, the PDU header of the adaptation layer PDU at least including: end-to-end bearer identifiers of a first remote UE and a second remote UE on the sidelink interface.

In an embodiment of the present disclosure, the bearer identifier of the remote UE on the sidelink interface includes: a sidelink interface source L2 ID, a sidelink interface destination L2 ID, and a sidelink interface logical channel identifier; or, the bearer identifier of the remote UE on the sidelink interface includes: the sidelink interface source L2 ID, the sidelink interface destination L2 ID, and a sidelink interface bearer identifier; the end-to-end bearer identifiers of the first remote UE and the second remote UE on the sidelink interface include: the sidelink interface source L2 ID, the sidelink interface destination L2 ID, and the sidelink interface logical channel identifier; or, the end-to-end bearer identifiers of the first remote UE and the second remote UE on the sidelink interface include: the sidelink interface source L2 ID, the sidelink interface destination L2 ID, and the sidelink interface bearer identifier.

In an embodiment of the present disclosure, the identifier of the end-to-end bearer between the remote UE and the network device allocated by the network device to the remote UE includes: UE identification information allocated by the network device to the remote UE, an end-to-end logical channel identifier between the remote UE and the network device; or, the identifier of the end-to-end bearer identifier between the remote UE and the network device allocated by the network device to the remote UE includes: the UE identification information allocated by the network device to the remote UE, an end-to-end bearer identifier between the remote UE and the network device.

In an embodiment of the present disclosure, for a UE-to-Network relay scenario, the establishing module is further configured to: establish the end-to-end adaptation layer between the remote UE and the network device; or, establish the end-to-end adaptation layer between a relay UE and the network device.

In an embodiment of the present disclosure, for a UE-to-UE relay scenario, the establishing module is further configured to: establishing the end-to-end adaptation layer between a first remote UE and a second remote UE; or, establishing the end-to-end adaptation layer between a relay UE and the second remote UE.

In a third aspect, an embodiment of the present disclosure provides an information transmission device including: a transceiver, a memory, a processor, and a program stored on the memory and executed by the processor; wherein the processor is configured to read program instructions in the memory and perform the following operations: in a layer 2 (L2) relay scenario, establishing an end-to-end adaptation layer; wherein, a function of the end-to-end adaptation layer includes one or a combination of routing and bearer mapping.

In an embodiment of the present disclosure, for a UE-to-Network relay scenario, a protocol data unit (PDU) header of an adaptation layer PDU at least including: a bearer identifier of a remote UE on a sidelink interface, or an identifier of an end-to-end bearer between the remote UE and a network device allocated by the network device to the remote UE; for a UE-to-UE relay scenario, the PDU header of the adaptation layer PDU at least including: end-to-end bearer identifiers of a first remote UE and a second remote UE on the sidelink interface.

In an embodiment of the present disclosure, the bearer identifier of the remote UE on the sidelink interface includes: a sidelink interface source L2 ID, a sidelink interface destination L2 ID, and a sidelink interface logical channel identifier; or, the bearer identifier of the remote UE on the sidelink interface includes: the sidelink interface source L2 ID, the sidelink interface destination L2 ID, and a sidelink interface bearer identifier; the end-to-end bearer identifiers of the first remote UE and the second remote UE on the sidelink interface include: the sidelink interface source L2 ID, the sidelink interface destination L2 ID, and the sidelink interface logical channel identifier; or, the end-to-end bearer identifiers of the first remote UE and the second remote UE on the sidelink interface include: the sidelink interface source L2 ID, the sidelink interface destination L2 ID, and the sidelink interface bearer identifier.

In an embodiment of the present disclosure, the PDU header of the adaptation layer PDU further includes a sidelink interface cast type identifier.

In an embodiment of the present disclosure, the identifier of the end-to-end bearer between the remote UE and the network device allocated by the network device to the remote UE includes: UE identification information allocated by the network device to the remote UE, an end-to-end logical channel identifier between the remote UE and the network device; or, the identifier of the end-to-end bearer identifier between the remote UE and the network device allocated by the network device to the remote UE includes: the UE identification information allocated by the network device to the remote UE, an end-to-end bearer identifier between the remote UE and the network device.

In an embodiment of the present disclosure, for a UE-to-Network relay scenario, the processor is further configured to read program instructions in the memory and perform the following operations: establishing the end-to-end adaptation layer between the remote UE and the network device; or, establishing the end-to-end adaptation layer between a relay UE and the network device.

In an embodiment of the present disclosure, the processor is further configured to read program instructions in the memory and perform the following operations: adding the end-to-end adaptation layer above a radio link control (RLC) layer of the remote UE and above an RLC layer of the network device.

In an embodiment of the present disclosure, if the PDU header of the adaptation layer PDU at least includes: the bearer identifier of the remote UE on the sidelink interface: if the device is applied to a remote UE, the processor is further configured to read program instructions in the memory and perform the following operations: in the uplink direction, generating, by the adaptation layer of the remote UE, the adaptation layer PDU, and delivering the adaptation layer PDU to a corresponding RLC entity according to a first mapping relationship; the first mapping relationship being a mapping relationship between the end-to-end bearer between the network device and the remote UE and the sidelink interface bearer of the remote UE; in a downlink direction, receiving, by the remote UE, the adaptation layer PDU, and determining the bearer identifier of the end-to-end bearer between the remote UE and the network device corresponding to the adaptation layer PDU according to a fifth mapping relationship and the bearer identifier of the remote UE on the sidelink interface included in the PDU header of the adaptation layer PDU, and determining a corresponding PDCP entity; the fifth mapping relationship being a mapping relationship between the sidelink interface bearer of the remote UE and the end-to-end bearer between the remote UE and the network device; if the device is used in a relay UE, the processor is further configured to read program instructions in the memory and perform the following operations: in the uplink direction, receiving, by the relay UE, the adaptation layer PDU, and delivering the adaptation layer PDU to an RLC entity corresponding to a Uu interface backhaul link bearer according to a second mapping relationship and the bearer identifier of the remote UE on the sidelink interface; the second mapping relationship being a mapping relationship between a sidelink interface bearer of the remote UE and a Uu interface backhaul link bearer of the remote UE; in the downlink direction, receiving the adaptation layer PDU from the network device, determining the corresponding sidelink interface bearer according to the bearer identifier of the remote UE on the sidelink interface, and delivering the adaptation layer PDU to the RLC entity corresponding to the sidelink interface bearer; if the device is used in a network device, the processor is further configured to read program instructions in the memory and perform the following operations: in the uplink direction, determining, by the network device, the bearer identifier of the end-to-end bearer between the remote UE and the network device corresponding to the adaptation layer PDU according to a third mapping relationship and the bearer identifier of the remote UE on the sidelink interface included in the PDU header of the adaptation layer PDU, and determining a corresponding packet data convergence protocol (PDCP) entity; the third mapping relationship being a mapping relationship between the sidelink interface bearer of the remote UE and the end-to-end bearer between the remote UE and the network device; in the downlink direction, generating, by the adaptation layer of the network device, the adaptation layer PDU, and delivering the adaptation layer PDU to the corresponding RLC entity according to a fourth mapping relationship; the fourth mapping relationship being a mapping relationship between the end-to-end bearer between the network device and the remote UE and the Uu interface backhaul link bearer of the remote UE.

In an embodiment of the present disclosure, if the PDU header of the adaptation layer PDU at least includes: the identifier of the end-to-end bearer between the remote UE and the network device allocated by the network device to the remote UE: if the device is applied to a remote UE, the processor is further configured to read program instructions in the memory and perform the following operations: in the uplink direction, generating, by the adaptation layer of the remote UE, the adaptation layer PDU, and delivering the adaptation layer PDU to a corresponding RLC entity according to a sixth mapping relationship; the sixth mapping relationship being a mapping relationship between the end-to-end bearer between the network device and the remote UE and the sidelink interface bearer of the remote UE; in the downlink direction, receiving the adaptation layer PDU from the relay UE, and determining the corresponding PDCP entity according to the identifier of the end-to-end bearer between the remote UE and the network device allocated by the network device to the remote UE included in the PDU header of the adaptation layer PDU; if the device is applied to a relay UE, the processor is further configured to read program instructions in the memory and perform the following operations: in the uplink direction, receiving, by the relay UE, the adaptation layer PDU, and delivering the adaptation layer PDU to an RLC entity corresponding to the Uu interface backhaul link bearer according to a seventh mapping relationship; the seventh mapping relationship being a mapping relationship between the sidelink interface bearer of the remote UE and the Uu interface backhaul link bearer of the remote UE; in the downlink direction, receiving, by the relay UE, the adaptation layer PDU, and determining the corresponding sidelink interface bearer according to the identifier of the end-to-end bearer between the remote UE and the network device allocated by the network device to the remote UE and a ninth mapping relationship, and delivering the adaptation layer PDU to the RLC entity corresponding to the sidelink interface bearer; the ninth mapping relationship being a mapping relationship between the Uu interface backhaul link bearer of the remote UE and the sidelink interface bearer of the remote UE; if the device is applied to a network device, the processor is further configured to read program instructions in the memory and perform the following operations: in the uplink direction, receiving the adaptation layer PDU from the relay UE, determining the corresponding PDCP entity according to the bearer identifier of the end-to-end bearer between the remote UE and the network device allocated by the network device to the remote UE included in the PDU header of the adaptation layer PDU; in the downlink direction, generating, by the adaptation layer of the network device, the adaptation layer PDU, and delivering the adaptation layer PDU to the corresponding RLC entity according to an eighth mapping relationship; the eighth mapping relationship being a mapping relationship between the end-to-end bearer between the network device and the remote UE and the Uu interface backhaul link bearer of the remote UE.

In an embodiment of the present disclosure, the processor is further configured to read program instructions in the memory and perform the following operations: adding the end-to-end adaptation layer above the RLC layer of the relay UE and above the RLC layer of the network devices respectively.

In an embodiment of the present disclosure, if the PDU header of the adaptation layer PDU at least includes: the bearer identifier of the remote UE on the sidelink interface: if the device is applied to a remote UE, the processor is further configured to read program instructions in the memory and perform the following operations: in the uplink direction, generating, by the remote UE, a PDCP PDU, and delivering the PDCP PDU to a corresponding RLC entity according to a tenth mapping relationship; the tenth mapping relationship being a mapping relationship between that the end-to-end bearer between the remote UE and the network device and the sidelink interface bearer of the remote UE; in the downlink direction, receiving, by the remote UE, the RLC PDU, and determining the corresponding PDCP entity according to a fourteenth mapping relationship; the fourteenth mapping relationship being a mapping relationship between the sidelink interface bearer of the remote UE and the end-to-end bearer between the remote UE and the network device;
if the device is applied to the relay UE, the processor is further configured to read program instructions in the memory and perform the following operations: in the uplink direction, generating, by the relay UE, the adaptation layer PDU according to the PDCP PDU, and delivering the adaptation layer PDU to the corresponding RLC entity according to an eleventh mapping relationship; the eleventh mapping relationship being a mapping relationship between the sidelink interface bearer of the remote UE and the Uu interface backhaul link bearer of the remote UE; in the downlink direction, receiving the adaptation layer PDU from the network device, removing an adaptation layer header of the adaptation layer PDU, and obtaining a to-be-processed data packet; determining the corresponding sidelink interface bearer according to the bearer identifier of the remote UE on the sidelink interface, and delivering the to-be-processed data packet to the RLC entity corresponding to the sidelink interface bearer; if the device is applied to the network device, the processor is further configured to read program instructions in the memory and perform the following operations: in the uplink direction, determining, by the network device, the bearer identifier of the end-to-end bearer between the remote UE and the network device corresponding to the adaptation layer PDU according to a twelfth mapping relationship and the bearer identifier of the remote UE on the sidelink interface included in the PDU header of the adaptation layer PDU, and determining the corresponding PDCP entity; the twelfth mapping relationship being a mapping relationship between the sidelink interface bearer of the remote UE and the end-to-end bearer between the remote UE and the network device; in the downlink direction, generating, by the adaptation layer of the network device, the adaptation layer PDU, and delivering the adaptation layer PDU to the corresponding RLC entity according to a thirteenth mapping relationship; the thirteenth mapping relationship being a mapping relationship between the end-to-end bearer between the network device and the remote UE and the Uu interface backhaul link bearer of the remote UE.

In an embodiment of the present disclosure, if the PDU header of the adaptation layer PDU at least includes: the identifier of the end-to-end bearer between the remote UE and the network device allocated by the network device to the remote UE: if the device is applied to the remote UE, the processor is further configured to read program instructions in the memory and perform the following operations: in the uplink direction, generating, by the remote UE, the PDCP PDU, and delivering the PDCP PDU to the corresponding RLC entity according to a fifteenth mapping relationship; the fifteenth mapping relationship being a mapping relationship between the end-to-end bearer between the remote UE and the network device and the sidelink interface bearer of the remote UE; in the downlink direction, receiving, by the remote UE, the RLC PDU, determining the corresponding PDCP entity according to a nineteenth mapping relationship; the nineteenth mapping relationship being a mapping relationship between the sidelink interface bearer of the remote UE and the end-to-end bearer between the remote UE and the network device; if the device is applied to the relay UE, the processor is further configured to read program instructions in the memory and perform the following operations: in the uplink direction, generating, by the relay UE, the adaptation layer PDU according to the PDCP PDU, and delivering the adaptation layer PDU to the RLC entity corresponding to the Uu interface backhaul link bearer according to a sixteenth mapping relationship; the sixteenth mapping relationship being a mapping relationship between the sidelink interface bearer of the remote UE and the Uu interface backhaul link bearer of the remote UE; in the downlink direction, receiving, by the relay UE, the adaptation layer PDU, removing the adaptation layer header of the adaptation layer PDU, and obtaining a to-be-processed data packet; determining the sidelink interface bearer corresponding to the remote UE according to an eighteenth mapping relationship, and delivering the to-be-processed data packet to the RLC entity corresponding to the sidelink interface bearer; the eighteenth mapping relationship being a mapping relationship between the Uu interface backhaul link bearer of the remote UE and the sidelink interface bearer of the remote UE; if the device is applied to the network device, the processor is further configured to read program instructions in the memory and perform the following operations: in the uplink direction, determining the corresponding PDCP entity according to the identifier of the end-to-end bearer between the remote UE and the network device allocated by the network device to the remote UE and contained in the PDU header of the adaptation layer PDU sent by the relay UE; in the downlink direction, generating by the adaptation layer of the network device, the adaptation layer PDU, and delivering the adaptation layer PDU to the corresponding RLC entity according to a seventeenth mapping relationship; the seventeenth mapping relationship is a mapping relationship between the end-to-end bearer between the network device and the remote UE and the Uu interface backhaul link bearer of the remote UE.

In an embodiment of the present disclosure, for a UE-to-UE relay scenario, the processor is further configured to read program instructions in the memory and perform the following operations: establishing the end-to-end adaptation layer between the first remote UE and the second remote UE; or, establishing the end-to-end adaptation layer between the relay UE and the second remote UE.

In an embodiment of the present disclosure, the processor is further configured to read program instructions in the memory and perform the following operations: adding the end-to-end adaptation layer above the RLC layer of the first remote UE and above the RLC layer of the second remote UE respectively.

In an embodiment of the present disclosure, if the device is applied to the first remote UE, the processor is further configured to read program instructions in the memory and perform the following operations: generating, by an adaptation layer of the first remote UE, an adaptation layer PDU, and determining a corresponding RLC entity when the adaptation layer PDU is transmitted between the first remote UE and the relay UE according to a twentieth mapping relationship; the twentieth mapping relationship being a mapping relationship between a sidelink end-to-end bearer between the first remote UE and the second remote UE and a sidelink interface bearer between the first remote UE and the relay UE; if the device is applied to the relay UE, the processor is further configured to read program instructions in the memory and perform the following operations: receiving, by the relay UE, the adaptation layer PDU, and determining the corresponding RLC entity when the adaptation layer PDU is transmitted between the relay UE and the second remote UE according to a twenty-first mapping relationship; the twenty-first mapping relationship being a mapping relationship between the sidelink interface bearer between the first remote UE and the relay UE and the sidelink interface bearer between the relay UE and the second remote UE; if the device is applied to the second remote UE, the processor is further configured to read program instructions in the memory and perform the following operations: receiving, by the second remote UE, the adaptation layer PDU, and determining the corresponding the PDCP entity according to the end-to-end bearer identifiers of the first remote UE and the second remote UE on the sidelink interface included in the PDU header of the adaptation layer PDU.

In an embodiment of the present disclosure, the processor is further configured to read program instructions in the memory and perform the following operations: adding the end-to-end adaptation layer above the RLC layer of the relay UE and above the RLC layer of the second remote UE respectively.

In an embodiment of the present disclosure, if the device is applied to the first remote UE, the processor is further configured to read program instructions in the memory and perform the following operations: generating, by the first remote UE, the PDCP PDU, and determining the RLC entity corresponding to the PDCP PDU according to a twenty-second mapping relationship; the twenty-second mapping relationship being a mapping relationship between the sidelink end-to-end bearer between the first remote UE and the second remote UE and the end-to-end bearer between the first remote UE and the relay UE; if the device is applied to the relay UE, the processor is further configured to read program instructions in the memory and perform the following operations: generating, by the relay UE, the adaptation layer PDU according to the PDCP PDU, and determining a corresponding RLC entity when the adaptation layer PDU is transmitted between the relay UE and the second remote UE according to a twenty-third mapping relationship; the twenty-third mapping relationship being a mapping relationship between the sidelink interface bearer between the first remote UE and the relay UE and the sidelink interface bearer between the relay UE and the second remote UE; if the device is applied to the second remote UE, the processor is further configured to read program instructions in the memory and perform the following operations: receiving, by the second remote UE, the adaptation layer PDU, and determining the corresponding PDCP entity according to the end-to-end bearer identifiers of the first remote UE and the second remote UE on the sidelink interface included in the PDU header of the adaptation layer PDU.

In a fourth aspect, an embodiment of the present disclosure provides a computerreadable storage medium for storing a computer program, when executed by a processor, implements the steps in the information transmission method.

In an embodiment of the present disclosure, an end-to-end adaptation layer is established in an L2 relay scenario; the functions of the adaptation layer include one or a combination of the following: routing, bearer mapping. The solution in an embodiment of the present disclosure may ensure that the data transmission is performed normally through the relay between the remote UE and the network device or between two remote UEs.

### BRIEF DESCRIPTION OF THE DRAWINGS

In order to illustrate the technical solutions of the embodiments of the present disclosure more clearly, the following briefly introduces the accompanying drawings used in the embodiments of the present disclosure. Obviously, the accompanying drawings in the following description are only some embodiments of the present disclosure. For those of ordinary skill in the art, other drawings can also be obtained from these drawings without creative work.
FIG. 1 is a schematic diagram of UE-to-Network Relay in the related art;
FIG. 2 is a schematic diagram of UE-to-UE Relay in the related art;
FIG. 3 is a flowchart of an information transmission method provided by an embodiment of the present disclosure;
FIG. 4 is a first schematic diagrams of a PDU header of an adaptation layer PDU provided by an embodiment of the present disclosure;
FIG. 5 is a second schematic diagram of a PDU header of an adaptation layer PDU provided by an embodiment of the present disclosure;
FIG. 6 is a first schematic diagrams of a protocol stack provided by an embodiment of the present disclosure;
FIG. 7 is a second schematic diagram of a protocol stack provided by an embodiment of the present disclosure;
FIG. 8 is a third schematic diagram of a protocol stack provided by an embodiment of the present disclosure;
FIG. 9 is a fourth schematic diagram of a protocol stack provided by an embodiment of the present disclosure;
FIG. 10 is a third schematic diagram of a PDU header of an adaptation layer PDU provided by an embodiment of the present disclosure;
FIG. 11 is a fifth schematic diagram of a protocol stack provided by an embodiment of the present disclosure;
FIG. 12 is a sixth schematic diagram of a protocol stack provided by an embodiment of the present disclosure;
FIG. 13 is a seventh schematic diagram of a protocol stack provided by an embodiment of the present disclosure;
FIG. 14 is an eighth schematic diagram of a protocol stack provided by an embodiment of the present disclosure;
FIG. 15 is a fourth schematic diagram of a PDU header of an adaptation layer PDU provided by an embodiment of the present disclosure;
FIG. 16 is a fifth schematic diagram of a PDU header of an adaptation layer PDU provided by an embodiment of the present disclosure;
FIG. 17 is a sixth schematic diagram of a PDU header of an adaptation layer PDU provided by an embodiment of the present disclosure;
FIG. 18 is a seventh schematic diagram of a PDU header of an adaptation layer PDU provided by an embodiment of the present disclosure;
FIG. 19 is an eighth schematic diagram of the PDU header of the adaptation layer PDU provided by the embodiment of the present disclosure;
FIG. 20 is a ninth schematic diagram of the PDU header of the adaptation layer PDU provided by the embodiment of the present disclosure;
FIG. 21 is a structural diagram of an information transmission device provided by an embodiment of the present disclosure;
FIG. 22 is a structural diagram of an information transmission apparatus provided by an embodiment of the present disclosure.

### DETAILED DESCRIPTION

The technical solutions in the embodiments of the present disclosure will be clearly and completely described below with reference to the accompanying drawings in the embodiments of the present disclosure. Obviously, the described embodiments are part of the embodiments of the present disclosure, but not all of the embodiments. Based on the embodiments in the present disclosure, all other embodiments obtained by those of ordinary skill in the art without creative efforts shall fall within the protection scope of the present disclosure.

FIG. 3 is a flowchart of an information transmission method provided by an embodiment of the present disclosure, as shown in FIG. 3, including the following steps:
Step 301, in a layer 2 (L2) relay scenario, establishing an end-to-end adaptation layer; wherein, functions of the adaptation layer include one or a combination of the following: routing and bearer mapping.

Referring to FIG. 1 and FIG. 2, the relayed UE may also be referred to as a remote UE.

Hereinafter, in conjunction with different relay scenarios, the specific structure of the PDU and the data transmission process in the embodiment of the present disclosure will be described in detail.

The first scenario: UE-to-Network relay scenario

In this scenario, the PDU header of the adaptation layer PDU has two formats:
Format 1: The PDU header of the adaptation layer PDU at least includes: a bearer identifier of the remote UE on the sidelink interface.

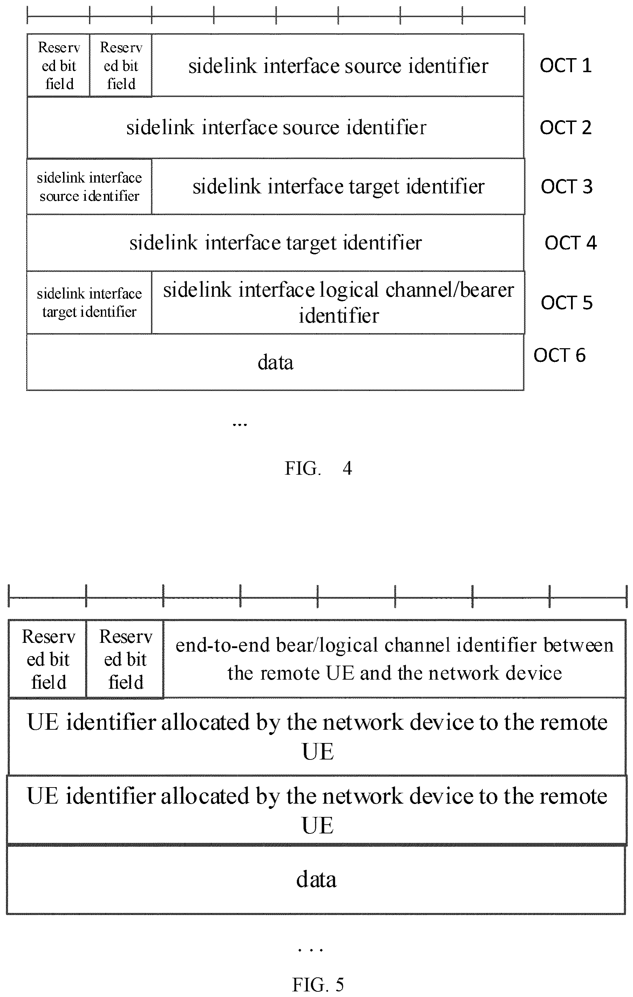

As shown in FIG. 4, the bearer identifier of the remote UE on the sidelink interface includes: a sidelink interface source L2 ID, a sidelink interface destination L2 ID, and a sidelink interface logical channel identifier; or, the bearer identifier of the remote UE on the sidelink interface includes: a sidelink interface source L2 ID, a sidelink interface destination L2 ID, and a sidelink interface bearer identifier. Further, the PDU header of the adaptation layer PDU further includes a sidelink interface cast type identifier. The cast type may include unicast, groupcast, broadcast, and the like.

Format 2: The PDU header of the adaptation layer PDU at least includes: a identifier of the end-to-end bearer between the remote UE and the network device allocated by the network device to the remote UE.

As shown in FIG. 5, the identifier of the end-to-end bearer between the remote UE and the network device allocated by the network device to the remote UE includes: UE identity information allocated by the network device to the remote UE, an end-to-end logical channel identifier between the remote UE and the network device; or, the identifier of the end-to-end bearer between the remote UE and the network device allocated by the network device to the remote UE includes: UE identity information allocated by the network device to the remote UE, an end-to-end bearer identifier between the remote UE and the network device.

Wherein, the UE identity information allocated by the network device to the remote UE may be C-RNTI (Cell RNTI, cell radio network temporary identity).

In practical applications, there are several modes to use the PDU header of the adaptation layer PDU:
Mode 1: a same format 1 of the PDU header of adaptation layer PDU is used in both the uplink and downlink transmission;
Mode 2: a same format 2 of the PDU header of the adaptation layer PDU is used in both the uplink and downlink transmission;;
Mode 3: the format 1 of the PDU header of the adaptation layer PDU is used in the uplink transmission, the format 2 of the PDU header of the adaptation layer PDU is used in the downlink transmission;
Mode 4: the format 1 of the PDU header of the adaptation layer PDU is used in the downlink transmission, the format 2 of the PDU header of the adaptation layer PDU is used in the uplink transmission.

In the first scenario, there are two modes to design the adaptation layer:
Mode 1: Establishing an end-to-end adaptation layer between the remote UE and the network device.

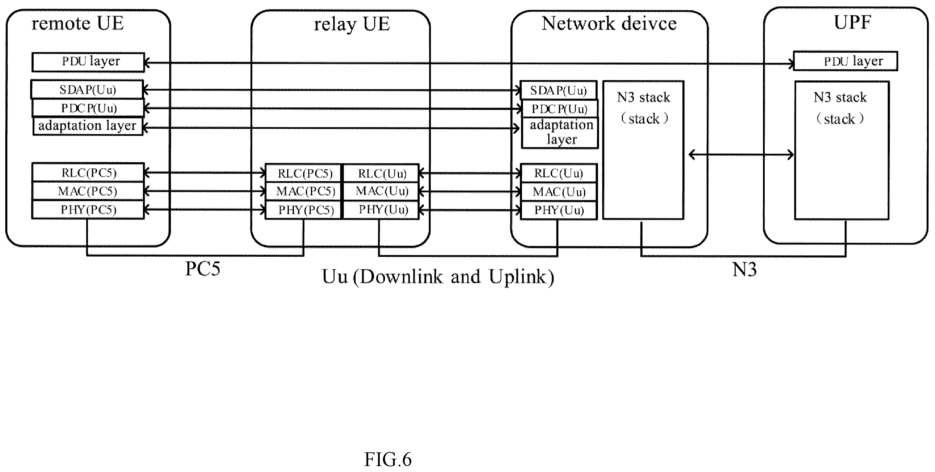

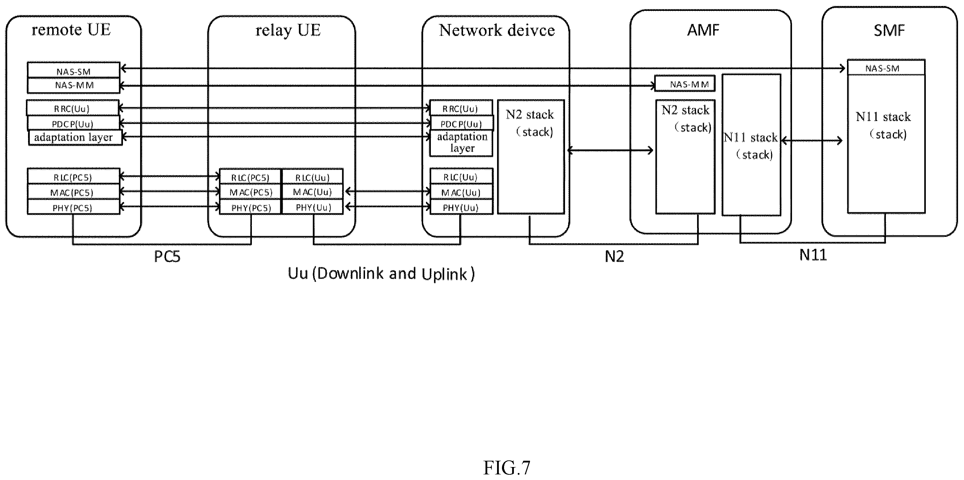

Specifically, an end-to-end adaptation layer (Adaptation) is added above the RLC layer of the remote UE and the RLC layer of the network device. FIGS. 6 and 7 show the structure of the protocol stack after the adaptation layer is introduced. FIG.6 shows the protocol stack in the user plane, and FIG. 7 shows the protocol stack in the control plane. The relay UE only performs mapping between the bearer of the sidelink interface of the remote UE and the bearer of the remote UE on the Uu interface backhaul link, and does not process the adaptation layer data PDU header and PDU payload.
1. If the PDU header of the adaptation layer PDU adopts format 1, that is, if the PDU header of the adaptation layer PDU at least includes: the bearer identifier of the remote UE on the sidelink interface:
   (1) The uplink data processing flow is as follows:
      The adaptation layer of the remote UE generates the adaptation layer PDU, and delivers the adaptation layer PDU to a corresponding RLC entity according to a first mapping relationship; the first mapping relationship is the mapping relationship between the end-to-end bearer between the network device and the remote UE and the sidelink interface bearer of the remote UE;
      The relay UE receives the adaptation layer PDU, and delivers the adaptation layer PDU to the RLC entity corresponding to the Uu interface backhaul link bearer according to a second mapping relationship and the bearer identifier of the remote UE on the sidelink interface; the second mapping relationship is the mapping relationship between the sidelink interface bearer of the remote UE and the Uu interface backhaul link bearer of the remote UE;
      The network device determines the bearer identifier of the end-to-end bearer between the remote UE and the network device corresponding to the adaptation layer PDU according to the bearer identifier of the remote UE on the sidelink interface and the third mapping relationship included in the PDU header of the adaptation layer PDU, and determine a corresponding packet data convergence protocol (PDCP) entity; the third mapping relationship is the mapping relationship between the sidelink interface bearer of the remote UE and the end-to-end bearer between the remote UE and the network device.
   (2) The downlink data processing flow is as follows:
      The adaptation layer of the network device generates an adaptation layer PDU, and delivers the adaptation layer PDU to the corresponding RLC entity according to a fourth mapping relationship; the fourth mapping relationship is a mapping relationship between the end-to-end bearer between the network device and the remote UE and the Uu interface backhaul link bearer of the remote UE;
      The relay UE receives the adaptation layer PDU, determines the corresponding sidelink interface bearer according to the bearer identifier of the remote UE on the sidelink interface, and delivers the adaptation layer PDU to the RLC entity corresponding to the sidelink interface bearer;
      The remote UE receives the adaptation layer PDU, and determines the bearer identifier of the end-to-end bearer between the remote UE and the network device corresponding to the adaptation layer PDU according to the bearer identifier of the remote UE on the sidelink interface and the fifth mapping relationship included in the PDU header of the adaptation layer PDU, and determine a corresponding PDCP entity; the fifth mapping relationship is the mapping relationship between the sidelink interface bearer of the remote UE and the end-to-end bearer between the remote UE and the network device.
2. If the PDU header of the adaptation layer PDU adopts the format 2, that is, if the PDU header of the adaptation layer PDU at least includes: the identifier of the end-to-end bearer between the remote UE and the network device allocated by the network device to the remote UE:
   (1) The uplink data processing flow is as follows:
      The adaptation layer of the remote UE generates the adaptation layer PDU, and delivers the adaptation layer PDU to a corresponding RLC entity according to a sixth mapping relationship; the sixth mapping relationship is the mapping relationship between the end-to-end bearer between the network device and the remote UE and the sidelink interface bearer of the remote UE;
      The relay UE receives the adaptation layer PDU, and delivers the adaptation layer PDU to the RLC entity corresponding to the Uu interface backhaul link bearer according to a seventh mapping relationship; the seventh mapping relationship is the mapping relationship between the sidelink interface bearer of the remote UE and the Uu interface backhaul link bearer of the remote UE;
      The network device receives the adaptation layer PDU and determines the corresponding PDCP entity according to the bearer identifier of the end-to-end bearer between the remote UE and the network device allocated by the network device to the remote UE included in the PDU header of the adaptation layer PDU.
   (2) The downlink data processing flow is as follows:
      The adaptation layer of the network device generates an adaptation layer PDU, and delivers the adaptation layer PDU to the corresponding RLC entity according to an eighth mapping relationship; the eighth mapping relationship is a mapping relationship between the end-to-end bearer between the network device and the remote UE and the Uu interface backhaul link bearer of the remote UE;
      The relay UE receives the adaptation layer PDU, and determines the corresponding sidelink interface bearer according to the identifier of the end-to-end bearer between the remote UE and the network device allocated by the network device to the remote UE and a ninth mapping relationship, and delivers the adaptation layer PDU to the RLC entity corresponding to the sidelink interface bearer; the ninth mapping relationship is the mapping relationship between the Uu interface backhaul link bearer of the remote UE and the sidelink interface bearer of the remote UE;
      The remote UE receives the adaptation layer PDU, and determine the corresponding PDCP entity according to the identifier of the end-to-end bearer between the remote UE and the network device allocated by the network device to the remote UE included in the PDU header of the adaptation layer PDU.

Mode 2: Establishing an end-to-end adaptation layer between the relay UE and the network device.

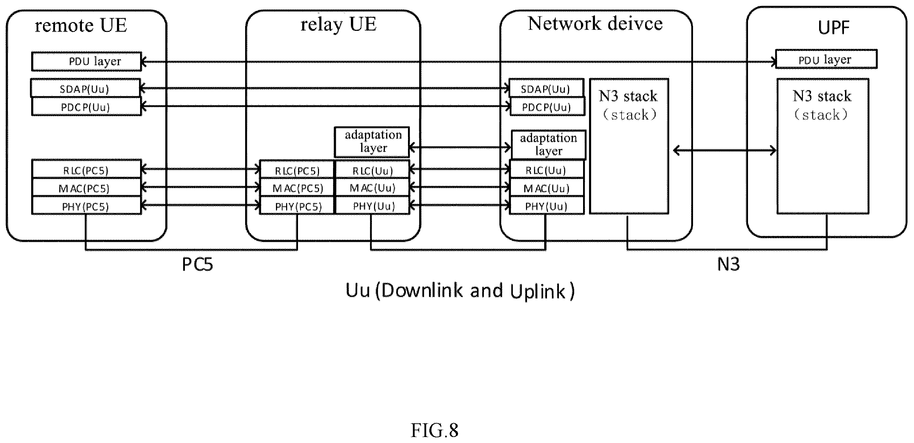

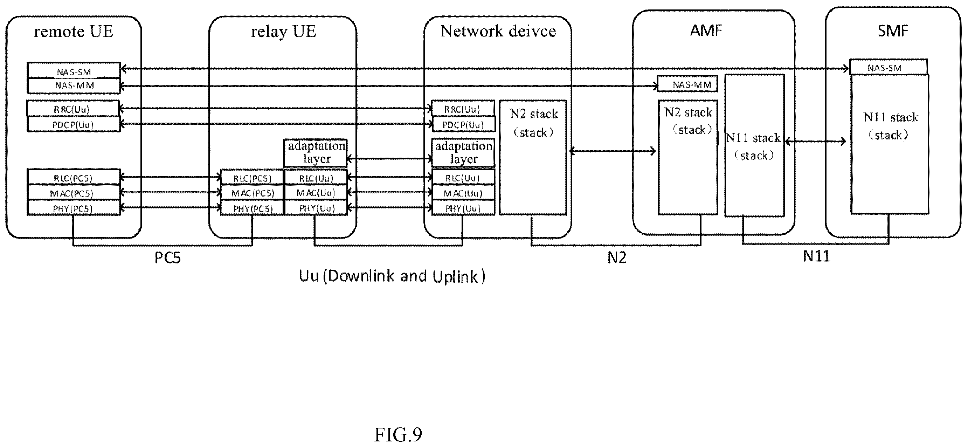

Specifically, an end-to-end adaptation layer is respectively added above the RLC layer of the relay UE and above the RLC layer of the network device. FIGS. 8 and 9 show the structure of the protocol stack after the adaptation layer is introduced. FIG. 8 shows the protocol stack on the user plane, and FIG. 9 shows the protocol stack on the control plane.
1. If the PDU header of the adaptation layer PDU adopts the format 1, that is, if the PDU header of the adaptation layer PDU at least includes: the bearer identifier of the remote UE on the sidelink interface:
   (1) The uplink data processing flow is as follows:
      The remote UE generates a PDCP PDU, and delivers the PDCP PDU to the corresponding RLC entity according to a tenth mapping relationship; the tenth mapping relationship is the mapping relationship between that the end-to-end bearer between the remote UE and the network device and the sidelink interface bearer of the remote UE;
      The relay UE generates an adaptation layer PDU according to the PDCP PDU, and delivers the adaptation layer PDU to the corresponding RLC entity according to an eleventh mapping relationship; the eleventh mapping relationship is the mapping relationship between the sidelink interface bearer of the remote UE and the Uu interface backhaul link bearer of the remote UE;
      The network device determines the bearer identifier of the end-to-end bearer between the remote UE and the network device corresponding to the adaptation layer PDU according to the bearer identifier of the remote UE on the sidelink interface and a twelfth mapping relationship included in the PDU header of the adaptation layer PDU, and determine the corresponding PDCP entity; the twelfth mapping relationship is the mapping relationship between the sidelink interface bearer of the remote UE and the end-to-end bearer between the remote UE and the network device.
2. If the PDU header of the adaptation layer PDU adopts the format 2, that is, if the PDU header of the adaptation layer PDU at least includes: the identifier of the end-to-end bearer between the remote UE and the network device allocated by the network device to the remote UE :
   (1) The uplink data processing flow is as follows:
      The adaptation layer of the network device generates an adaptation layer PDU, and delivers the adaptation layer PDU to the corresponding RLC entity according to a thirteenth mapping relationship; the thirteenth mapping relationship is the mapping relationship between the end-to-end bearer between the network device and the remote UE and the Uu interface backhaul link bearer of the remote UE;
      The relay UE receives the adaptation layer PDU, removes the adaptation layer header of the adaptation layer PDU, and obtains the data packet to be processed; determines the corresponding sidelink interface bearer according to the bearer identifier of the remote UE on the sidelink interface, and deliver the to-be-processed data packet to the RLC entity corresponding to the sidelink interface bearer;
      The remote UE receives the RLC PDU, and determines the corresponding PDCP entity according to a fourteenth mapping relationship; the fourteenth mapping relationship is the mapping relationship between the sidelink interface bearer of the remote UE and the end-to-end bearer between the remote UE and the network device.
   (2) The downlink data processing flow is as follows:
      The adaptation layer of the network device generates an adaptation layer PDU, and delivers the adaptation layer PDU to the corresponding RLC entity according to a seventeenth mapping relationship; the seventeenth mapping relationship is mapping relationship between the end-to-end bearer between the network device and the remote UE and the Uu interface backhaul link bearer of the remote UE;
      The relay UE receives the adaptation layer PDU, removes the adaptation layer header of the adaptation layer PDU, and obtains the data packet to be processed; determines the sidelink interface bearer corresponding to the remote UE according to an eighteenth mapping relationship, and delivers the to-be-processed data packet to the RLC entity corresponding to the sidelink interface bearer; the eighteenth mapping relationship is the relationship between the Uu interface backhaul link bearer of the remote UE and the sidelink interface bearer of the remote UE;
      The remote UE receives the RLC PDU, and determines the corresponding PDCP entity according to a nineteenth mapping relationship; the nineteenth mapping relationship is the mapping relationship between the sidelink interface bearer of the remote UE and the end-to-end bearer between the remote UE and the network device.

### The second scenario: UE-to-UE relay scenario

For the UE-to-UE relay scenario, the PDU header of the adaptation layer PDU at least includes: end-to-end bearer identifiers of the first remote UE and the second remote UE on the sidelink interface.

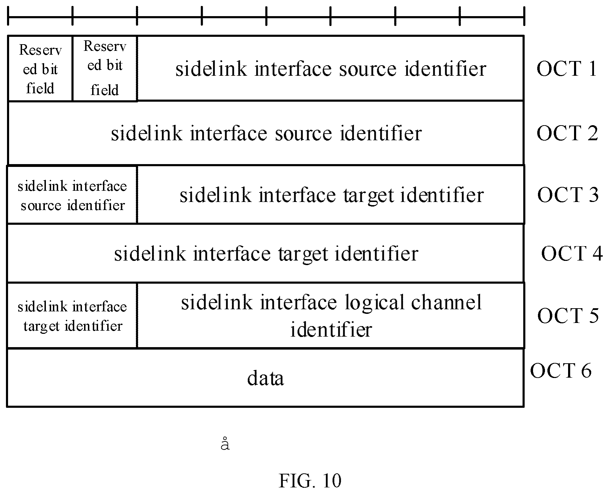

The sidelink interface refers to an end-to-end sidelink interface between the first remote UE and the second remote UE. With reference to FIG. 10, the end-to-end bearer identifiers of the first remote UE and the second remote UE on the sidelink interface include: a sidelink interface source L2 ID, a sidelink interface destination L2 ID, and a sidelink interface logical channel identifier; or, the end-to-end bearer identifiers of the first remote UE and the second remote UE on the sidelink interface include: a sidelink interface source L2 ID, a sidelink interface destination L2 ID, and a sidelink interface bearer identifier.

In the second scenario, there are two modes to design the adaptation layer:
Mode 1: Establishing an end-to-end adaptation layer between the first remote UE (remote UE1) and the second remote UE (remote UE2).

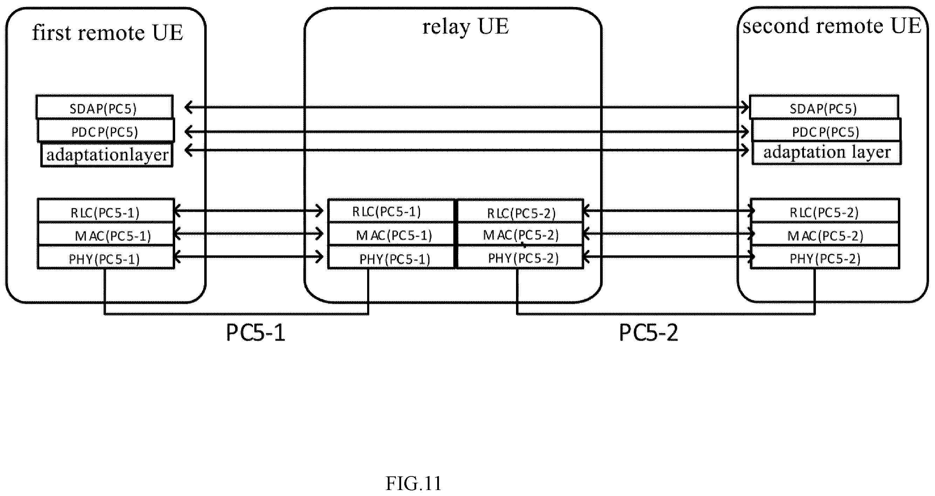

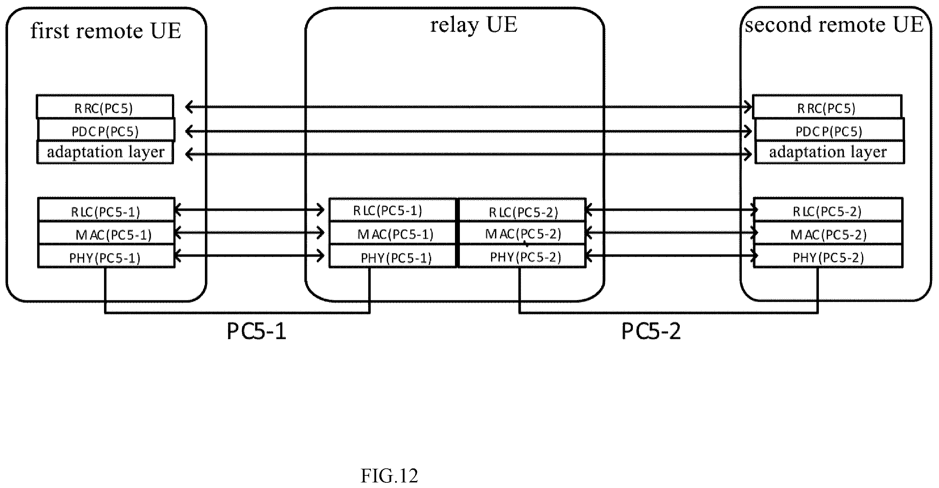

Specifically, an end-to-end adaptation layer is respectively added above the RLC layer of the first remote UE and the RLC layer of the second remote UE. FIGS. 11 and 12 show the protocol stack structure after the adaptation layer is introduced. FIG. 11 shows the protocol stack on the user plane, and FIG. 12 shows the protocol stack on the control plane. The relay UE only performs the mapping between the bearer of the sidelink interface between the first remote UE and the relay UE and the bearer of the sidelink interface between the second remote UE and the relay UE, and does not process the adaptation layer data PDU header and pay load.

In this way, the data processing flow is as follows:
The adaptation layer of the first remote UE generates an adaptation layer PDU, and determines the corresponding RLC entity when the adaptation layer PDU is transmitted between the first remote UE and the relay UE according to a twentieth mapping relationship; the twentieth mapping relationship is the mapping relationship between the sidelink end-to-end bearer between the first remote UE and the second remote UE and the sidelink interface bearer between the first remote UE and the relay UE;
The relay UE receives the adaptation layer PDU, and determines the corresponding RLC entity when the adaptation layer PDU is transmitted between the relay UE and the second remote UE according to a twenty-first mapping relationship; the twenty-first mapping relationship is a mapping relationship between the bearer of the sidelink interface between the first remote UE and the relay UE and the bearer of the sidelink interface between the relay UE and the second remote UE;
The second remote UE receives the adaptation layer PDU, and determines the corresponding the PDCP entity according to the end-to-end bearer identifiers of the first remote UE and the second remote UE on the sidelink interface included in the PDU header of the adaptation layer PDU.

Mode 2: Establishing an end-to-end adaptation layer between the relay UE and the second remote UE.

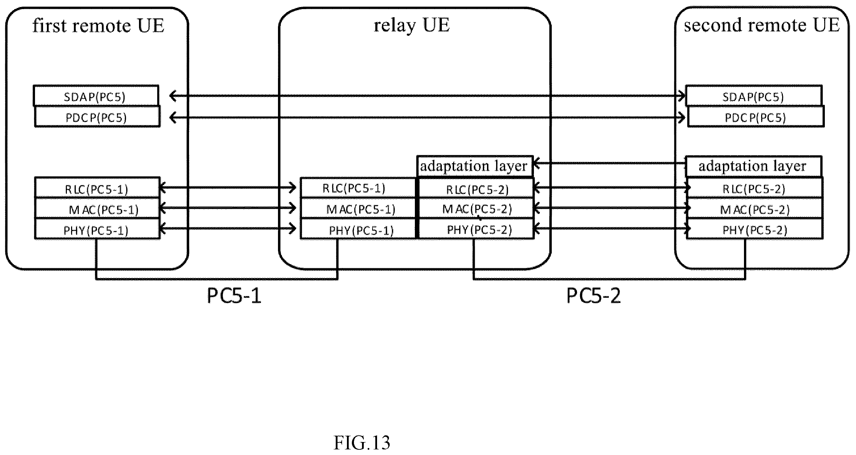

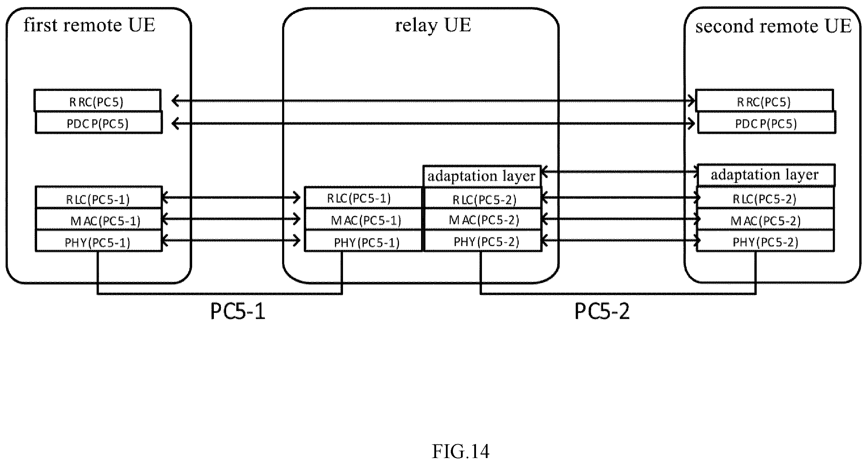

Specifically, an end-to-end adaptation layer is respectively added above the RLC layer of the relay UE and the RLC layer of the second remote UE. FIGS. 13 and 14 show the protocol stack structure after the adaptation layer is introduced. FIG. 13 shows the protocol stack on the user plane, and FIG. 14 shows the protocol stack on the control plane.

In this way, the data processing flow is as follows:
The first remote UE generates a PDCP PDU, and determines the RLC entity corresponding to the PDCP PDU according to a twenty-second mapping relationship; the twenty-second mapping relationship is the mapping relationship between the sidelink end-to-end bearer between the first remote UE and the second remote UE and the end-to-end bearer between the first remote UE and the relay UE;
The relay UE generates an adaptation layer PDU according to the PDCP PDU, and determines a corresponding RLC entity when the adaptation layer PDU is transmitted between the relay UE and the second remote UE according to a twenty-third mapping relationship; the twenty-third mapping relationship is the mapping relationship between the bearer of the sidelink interface between the first remote UE and the relay UE and the bearer of the sidelink interface between the relay UE and the second remote UE;
The second remote UE receives the adaptation layer PDU, and determines the corresponding PDCP entity according to the end-to-end bearer identifiers of the first remote UE and the second remote UE on the sidelink interface included in the PDU header of the adaptation layer PDU.

In the embodiment of the present disclosure, in the L2 relay scenario, an end-to-end adaptation layer is established, and the adaptation layer can perform functions such as routing and bearer mapping. Therefore, the solutions of the embodiments of the present disclosure are used in the L2 relay scenario, which ensured that data transmission can be normally performed between the remote UE and the network device or between two remote UEs through the relay.

In the embodiment of the present disclosure, for the UE-to-Network relay scenario, the PDU header of the adaptation layer PDU needs to include at least: the bearer identifier of the remote UE on the sidelink interface or the identifier of the end-to-end bearer between the remote UE and the network device allocated by the network device to the remote UE. For the UE-to-UE relay scenario, the PDU header of the adaptation layer PDU needs to include at least: the end-to-end bearer identifiers of the remote UE1 and the remote UE2 on the sidelink interface.

The specific implementation process of the embodiments of the present disclosure will be described in detail below with reference to different embodiments.

In one embodiment of the present disclosure, for the UE-to-Network relay scenario, the adaptation layer peer entity is located in the remote UE and the network device. In the embodiment of the present disclosure, an end-to-end adaptation layer is added above the RLC layer of the remote UE and the RLC layer of the network device. After the adaptation layer is introduced, the protocol stack structure is shown in FIG. 6 and FIG. 7, respectively. FIG. 6 shows the structure of the protocol stack on the user plane, and FIG. 7 shows the structure of the protocol stack on the control plane.

The relay UE only performs the mapping between the sidelink interface bearer of the remote UE and the Uu interface backhaul link bearer of the remote UE, and does not process the adaptation layer PDU header and the payload of the adaptation layer PDU.

In this embodiment of the present disclosure, the format of the adaptation layer PDU header can be designed in two modes:
Mode 1: The adaptation layer PDU header at least includes: a remote UE sidelink interface source L2 ID, a sidelink interface destination L2 ID, and a sidelink interface logical channel identifier. Optionally, the sidelink interface cast type identifier may also be carried. Or, the adaptation layer PDU header at least includes: a sidelink interface source L2 ID, a sidelink interface destination L2 ID, and a sidelink interface bearer identifier. Optionally, the sidelink interface cast type identifier may also be carried.

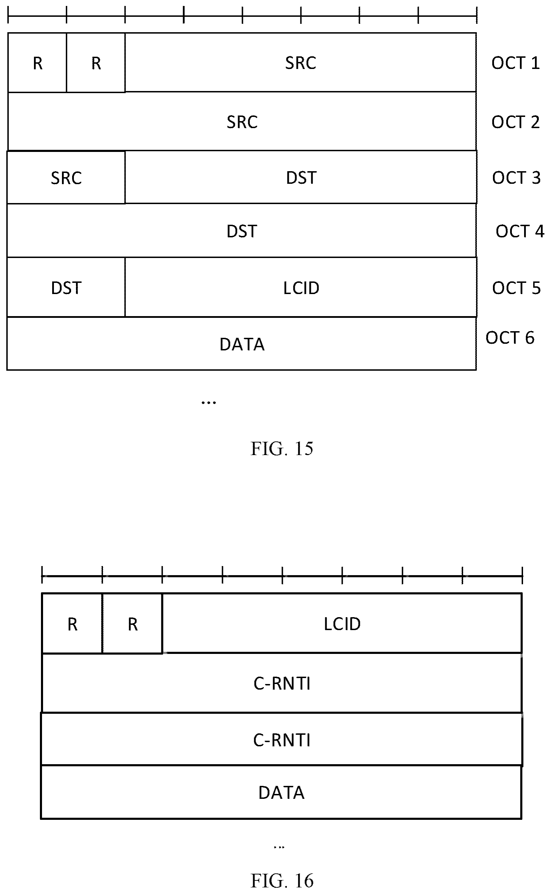

Assumptions: The reserved bits use the R identifier (occupying 2 bits), SRC is the sidelink source L2 ID (occupying 16 bits), DST is the sidelink destination L2 ID (occupying 16 bits), and logical channel identifier (LCID) is the sidelink interface logical channel identifier (occupying 6 bits), the format of the adaptation layer PDU header is shown in FIG. 15.

Mode 2: The adaptation layer PDU header at least includes: UE identification information allocated by the network device to the remote UE, and end-to-end logical channel identification information between the remote UE and the network device.

Assumptions: The reserved bits use the R identifier (occupying 2 bits), the UE identifier assigned by the network device to the remote UE is C-RNTI (occupying 16 bits), and the end-to-end logical channel identification information between the remote UE and the network device uses the LCID (occupying 6 bits), the schematic diagram of the format of the adaptation layer PDU header is shown in FIG. 16.

In the uplink direction, if the PDU header format adopts mode 1, the uplink data processing flow is as follows:
(1) The remote UE adaptation layer receives the PDCP PDU, adds the adaptation layer PDU header according to the adaptation layer PDU header format 1 to generate the adaptation layer PDU, and then delivers the adaptation layer PDU to the corresponding RLC entity according to the mapping relationship between the end-to-end bearer between the network device and the remote UE and the sidelink interface bearer of the remote UE.
(2) The relay UE does not do any processing on the adaptation layer PDU, but selects the corresponding Uu interface backhaul link bearer according to the mapping relationship between the sidelink interface bearer of the remote UE and the Uu interface backhaul link bearer of the remote UE, and then directly delivers the adaptation layer PDU to the RLC entity corresponding to the Uu interface backhaul link bearer.
(3) After receiving the adaptation layer PDU from a lower layer, the adaptation layer of the network device determines the bearer identifier of the end-to-end bearer between the remote UE and the network device corresponding to the adaptation layer PDU according to the mapping relationship between the bearer identifier of sidelink interface of the remote UE carried in the adaptation layer PDU header and the bearer identifier of sidelink interface of the remote UE maintained in the network device, and the end-to-end bearer identifier between the remote UE and the network device, so as to determine the corresponding the PDCP entity.

In the downlink direction, if the PDU header format adopts Mode 1, the downlink data processing flow is as follows:
(1) The network device adaptation layer receives the PDCP PDU, adds the adaptation layer PDU header according to the adaptation layer PDU format 1 to generate the adaptation layer PDU, and then delivers the adaptation layer PDU to the corresponding RLC entity according to the mapping relationship between the end-to-end bearer between the network device and the remote UE and the Uu interface backhaul link bearer of the remote UE.
(2) The relay UE does not perform processing on the adaptation layer PDU, but only reads the bearer identification information of the remote UE on the sidelink interface contained in the adaptation layer PDU header, and then selects the corresponding sidelink interface bearer according to the bearer identification information, and then directly delivers the adaptation layer PDU to the RLC entity corresponding to the sidelink interface bearer.
(3) After receiving the adaptation layer PDU from a lower layer, the remote UE adaptation layer determines the bearer identifier of the end-to-end bearer between the remote UE and the network device corresponding to the adaptation layer PDU according to the mapping relationship among the sidelink interface bearer identifier of the remote UE carried in the adaptation layer PDU header, the sidelink interface bearer identifier of the remote UE maintained by the remote UE, and the end-to-end bearer identifier between the remote UE and the network device, so as to determine the corresponding PDCP entity.

In the uplink direction, if the PDU header format adopts mode 2, the uplink data processing flow is as follows:
The remote UE adaptation layer receives the PDCP PDU, and adds the adaptation layer PDU header according to the adaptation layer PDU header format 2 to generate the adaptation layer PDU, and delivers the adaptation layer PDU to the corresponding RLC entity according to the mapping relationship between the end-to-end bearer between the remote UE and the network device and the sidelink interface bearer of the remote UE.

The relay UE does not perform any processing on the adaptation layer PDU, but only selects the corresponding Uu interface backhaul link bearer according to the mapping relationship between the sidelink interface bearer of the remote UE and the Uu interface backhaul link bearer of the remote UE and then directly delivers the adaptation layer PDU to the RLC entity corresponding to the Uu interface backhaul link bearer.

After receiving the adaptation layer PDU from a lower layer, the network device adaptation layer directly determines the corresponding PDCP entity according to the identifier of the end-to-end bearer between the remote UE and the network device allocated by the network device to the remote UE and carried in the adaptation layer PDU header.

In the downlink direction, if the PDU header format adopts Mode 2, the downlink data processing flow is as follows:
(1) The network device adaptation layer receives the PDCP PDU, adds the adaptation layer PDU header according to the adaptation layer PDU format 2 to generate the adaptation layer PDU, and delivers the adaptation layer PDU to the corresponding RLC entity for processing and transmission according to the mapping relationship between the end-to-end bearer between the network device and the remote UE and the Uu interface backhaul link bearer of the remote UE.
(2) The relay UE does not perform any processing on the adaptation layer PDU, but only reads the identifier of the end-to-end bearer between the remote UE and the network device that is allocated by the network device to the remote UE and contained in the adaptation layer PDU header, selects the corresponding sidelink interface bearer according to the mapping relationship between the Uu interface backhaul link bearer of the remote UE and the sidelink interface bearer, and then directly delivers the adaptation layer PDU to the RLC entity corresponding to the sidelink interface bearer.
(3) After receiving the adaptation layer PDU from the lower layer, the remote UE adaptation layer directly determines the corresponding PDCP entity according to the identifier of the end-to-end bearer between the remote UE and the network device allocated by the network device to the remote UE and carried in the adaptation layer PDU header.

In one embodiment of the present disclosure, for a UE-to-Network relay scenario, the adaptation layer peer entity is located in the relay UE and the network device. In this implementation, an end-to-end adaptation layer is added above the RLC layer of the relay UE and the RLC layer of the network device. After the adaptation layer is introduced, the protocol stack structure is shown in FIGS. 8 and 9, wherein FIG. 8 shows the structure of the protocol stack on the user plane and FIG. 9 shows the structure of the protocol stack on the control plane.

In this embodiment of the present disclosure, the format of the adaptation layer PDU header can be designed in two modes:
Mode 1: The adaptation layer PDU header at least includes: a remote UE sidelink interface source L2 ID, a sidelink interface destination L2 ID, and a sidelink interface logical channel identifier. Optionally, the sidelink interface cast type identifier may also be carried. Or, the adaptation layer PDU header at least includes: a sidelink interface source L2 ID, a sidelink interface destination L2 ID, and a sidelink interface bearer identifier. Optionally, the sidelink interface cast type identifier may also be carried.

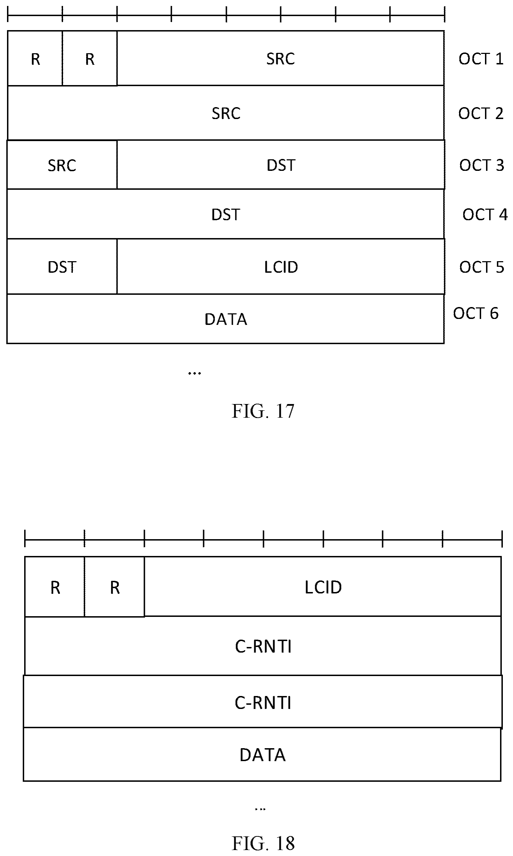

Assumptions: The reserved bits use the R identifier (occupying 2 bits), SRC is the sidelink source L2 ID (occupying 16 bits), DST is the sidelink destination L2 ID (occupying 16 bits), and logical channel identifier (LCID) is the sidelink interface logical channel identifier (occupying 6 bits), the format of the adaptation layer PDU header is shown in FIG. 17.

Mode 2: The adaptation layer PDU header at least includes: UE identification information allocated by the network device to the remote UE, and end-to-end logical channel identification information between the remote UE and the network device.

Assumptions: The reserved bits use the R identifier (occupying 2 bits), the UE identifier assigned by the network device to the remote UE is C-RNTI (occupying 16 bits), and the end-to-end logical channel identification information between the remote UE and the network device uses the LCID (occupying 6 bits), the schematic diagram of the format of the adaptation layer PDU header is shown in FIG. 18.

In the uplink direction, if the PDU header format adopts mode 1, the uplink data processing flow is as follows:
(1) The remote UE generates a PDCP PDU, then determines the corresponding RLC entity according to the mapping relationship between the end-to-end bearer between the remote UE and the network device and the sidelink interface bearer of the remote UE, and delivers the PDCP PDU the RLC entity.
(2) After receiving the data from the lower layer, the adaptation layer of the relay UE adds the adaptation layer PDU header according to the PDU header format 1 of the adaptation layer PDU to generate the adaptation layer PDU, and then determines the corresponding RLC entity according to the mapping relationship between the sidelink interface bearer of the remote UE and the Uu interface backhaul link bearer of the remote UE.
(3) After receiving the adaptation layer PDU from the lower layer, the adaptation layer of the network device determine the bearer identifier of the end-to-end bearer between the remote UE and the network device corresponding to the data according to the mapping relationship among the sidelink interface bearer identifier of the remote UE carried in the adaptation layer PDU header and the sidelink interface bearer identifier of the remote UE maintained in the network device and the end-to-end bearer identifier between the remote UE and the network device, so as to determine the corresponding PDCP entity.

In the downlink direction, if the PDU header format adopts Mode 1, the downlink data processing flow is as follows:
(1) The network device adaptation layer receives the PDCP PDU, adds the adaptation layer PDU header according to the adaptation layer PDU format 1 to generate the adaptation layer PDU, and then delivers the adaptation layer PDU to the corresponding RLC entity for processing and transmission according to the mapping relationship between the end-to-end bearer of the remote UE and the network device and the Uu interface backhaul link bearer of remote UE.
(2) After receiving the adaptation layer PDU from the lower layer, the adaptation layer of the relay UE removes the adaptation layer header, and determines the bearer used by the data on the sidelink interface according to the bearer identifier of the remote UE on the sidelink interface carried in the adaptation layer PDU header, then delivers the data packet for which the PDU header of the adaptation layer is removed to the RLC entity corresponding to the sidelink interface bearer.
(3) After the remote UE receives the RLC PDU, the PDCP entity corresponding to the RLC PDU can be determined according to the mapping relationship between the sidelink interface bearer of the remote UE and the end-to-end bearer between the remote UE and the network device.

In the uplink direction, if the PDU header format adopts mode 2, the uplink data processing flow is as follows:
(1) The remote UE generates a PDCP PDU, then determines the corresponding RLC entity according to the mapping relationship between the end-to-end bearer between the remote UE and the network device and the sidelink interface bearer of the remote UE, and delivers the PDCP PDU the RLC entity.
(2) After receiving the data from the lower layer, the adaptation layer of the relay UE adds the adaptation layer PDU header according to the PDU header format 2 of the adaptation layer PDU, generates the adaptation layer PDU, and then determines the corresponding RLC entity according to the mapping relationship between the sidelink interface bearer of the remote UE and the Uu interface backhaul link bearer of the remote UE, and then delivers the adaptation layer PDU to the RLC entity.
(3) After receiving the adaptation layer PDU from the lower layer, the network device adaptation layer determines the corresponding PDCP entity according to the end-to-end bearer identifier between the remote UE and the network device carried in the adaptation layer PDU header.

In the downlink direction, if the PDU header format adopts Mode 2, the downlink data processing flow is as follows:
(1) The network device adaptation layer receives the PDCP PDU, adds the adaptation layer PDU header according to the adaptation layer PDU format 2 to generate the adaptation layer PDU, and then delivers the adaptation layer PDU to the corresponding RLC entity for processing and transmission according to the mapping relationship between the end-to-end bearer between the network device and the remote UE and the Uu interface backhaul link bearer of the remote UE.
(2) After receiving the adaptation layer PDU from the lower layer, the adaptation layer of the relay UE removes the adaptation layer header, and determines the remote UE according to the remote UE identifier carried in the adaptation layer PDU header, and then determines the bearer used by the data on the sidelink interface according to the mapping relationship between the Uu interface backhaul link bearer of the remote UE and the sidelink interface bearer of the remote UE, and then delivers the data packet for which the PDU header of the adaptation layer is removed to the RLC entity corresponding to the sidelink interface bearer.
(3) After the remote end receives the RLC PDU, the PDCP entity corresponding to the RLC PDU can be determined according to the mapping relationship between the sidelink interface bearer of the remote UE and the end-to-end bearer between the remote UE and the network device.

In one embodiment of the present disclosure, for the UE-to-UE relay, the adaptation layer peer entity is located between the remote UE1 (the first terminal UE) and the remote UE2 (the second terminal UE). In the implementation of the present disclosure, an end-to-end adaptation layer is added above the RLC layer of the remote UE1 and the remote UE2. After the adaptation layer is introduced, the protocol stack structure is shown in FIG. 10 and FIG. 11, wherein, FIG. 10 shows the structure of the protocol stack on the user plane, FIG. 11 shows the structure of the protocol stack on the control plane. The relay UE only performs the mapping of the bearer of the sidelink interface between the remote UE1 and the relay UE and the bearer of the sidelink interface between the remote UE2 and the relay UE, and does not process the adaptation layer data PDU header and payload.

The format of the adaptation layer PDU header can be as follows:
The adaptation layer PDU header at least includes: a remote UE sidelink interface source L2 ID, a sidelink interface destination L2 ID, and a sidelink interface logical channel identifier. Optionally, the sidelink interface cast type identifier may also be carried. Or the adaptation layer PDU header at least includes: the sidelink interface source L2 ID, the sidelink interface destination L2 ID, and the sidelink interface bearer identifier. Optionally, the sidelink interface cast type identifier may also be carried.

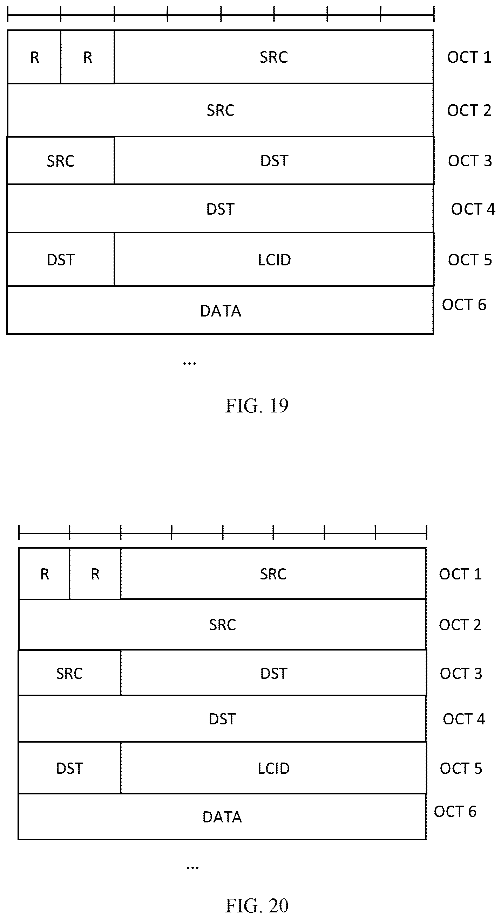

Assuming: the reserved bits use the R identifier (occupying 2 bits), SRC is the sidelink source L2 ID (occupying 16 bits), DST is the sidelink destination L2 ID (occupying 16 bits), and LCID is the sidelink interface logical channel identifier (occupying 6 bits), then the PDU header format of the adaptation layer is shown in FIG. 19.

In the embodiment of the present disclosure, the data transmission process on the relayed sidelink interface is as follows:
(1) The adaptation layer of the remote UE1 receives the PDCP PDU, and adds the adaptation layer PDU header according to the adaptation layer PDU header format 1 to generate the adaptation layer PDU, and then determines the corresponding RLC entity when the PDCP PDU is transmitted between the remote UE1 and the relay UE according to the mapping relationship between the sidelink end-to-end bearer between the remote UE1 and the remote UE2 and the sidelink interface bearer between the remote UE1 and the relay UE.
(2) The relay UE does not perform any processing on the adaptation layer PDU, but only selects the RLC entity corresponding to the adaptation layer PDU when the sidelink interface transmission is performed between the relay UE and the remote UE2 according to the mapping relationship between the bearer of the sidelink interface between the remote UE1 and the relay UE and the bearer of the sidelink interface between the relay UE and the remote UE2.
(3) After receiving the adaptation layer PDU from the lower layer, the adaptation layer of the remote UE2 directly determines the corresponding PDCP entity according to the bearer identifier of the sidelink end-to-end bearer between the remote UE1 and the remote UE2 carried in the adaptation layer PDU header,.

In one embodiment of the present disclosure, for a UE-to-UE relay, the adaptation layer peer entity is located between the relay and the remote UE2. In this embodiment, an end-to-end adaptation layer is added above the RLC layer of the relay UE and the remote UE2. After the adaptation layer is introduced, the protocol stack structure is shown in FIGS. 13 and 14, wherein FIG. 13 shows the structure of the protocol stack on the user plane, FIG. 14 shows the structure of the protocol stack on the control plane.

In this embodiment of the present disclosure, the format of the adaptation layer PDU header may be as follows:
The adaptation layer PDU header at least includes: the remote UE sidelink interface source L2 ID, the sidelink interface destination L2 ID, and the sidelink interface logical channel identifier. Optionally, the sidelink interface cast type identifier may also be carried. Or the adaptation layer PDU header at least includes: the sidelink interface source L2 ID, the sidelink interface destination L2 ID, and the sidelink interface bearer identifier. Optionally, the sidelink interface cast type identifier may also be carried.

Assuming: the reserved bits use the R identifier (occupying 2 bits), SRC is the sidelink source L2 ID (occupying 16 bits), DST is the sidelink destination L2 ID (occupying 16 bits), and LCID is the sidelink interface logical channel identifier (occupying 6 bits), then the PDU header format of the adaptation layer is shown in FIG. 20.

The data transmission process of the relayed sidelink interface is as follows:
(1) The remote UE1 generates a PDCP PDU, and the remote UE1 determines the RLC entity corresponding to the PDCP PDU according to the mapping relationship between the sidelink end-to-end bearer between the remote UE1 and the remote UE2 and the end-to-end bearer between the remote UE1 and the relay UE.
(2) The relay UE receives the RLC PDU, adds the adaptation layer PDU header according to the PDU header format of the adaptation layer PDU, generates the adaptation layer PDU, and then determines the corresponding RLC entity when the adaptation layer PDU is transmitted between the relay UE and the remote UE2 according to the mapping relationship between the sidelink interface bearer between remote UE1 and the relay UE and the sidelink interface bearer between the relay UE and the remote UE2.
(3) After receiving the adaptation layer PDU from the lower layer, the adaptation layer of the remote UE2 directly determines the corresponding PDCP entity according to the bearer identifiers of the sidelink end-to-end bearer between the remote UE1 and the remote UE2 carried in the adaptation layer PDU header.

It can be seen from the above that a method for designing an adaptation layer PDU in a relay scenario is provided in the embodiments of the present disclosure, thereby improving the protocol process and ensuring that the data transmission is performed normally through the relay between the remote UE and the network device or between two remote UEs.

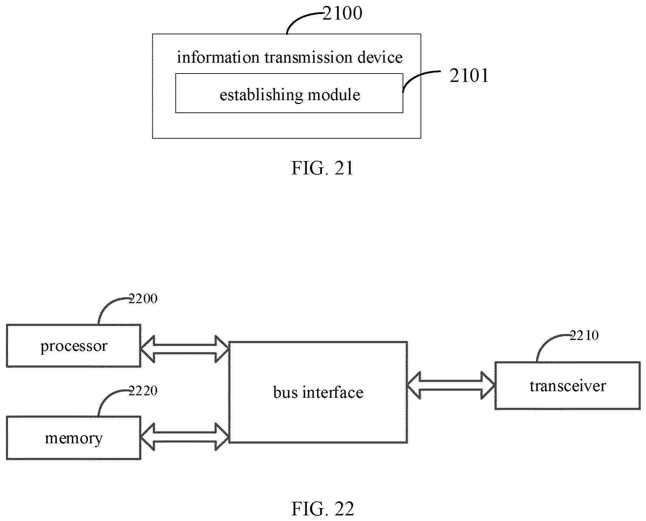

Embodiments of the present disclosure also provide an information transmission device. FIG. 21 is a structural diagram of a terminal device provided by an embodiment of the present disclosure. Since the principle of the information transmission device for solving the problem is similar to the information transmission method in the embodiment of the present disclosure, the implementation of the information transmission device may refer to the implementation of the method, and the repetition will not be repeated.

As shown in FIG. 21, the information transmission device 2100 includes: a establishing module 2101, configured to establish an end-to-end adaptation layer in an L2 relay scenario; wherein, the functions of the adaptation layer include one or a combination of the following: routing, bearer mapping.

For the design of the adaptation layer and the format of the PDU of the adaptation layer, reference may be made to the descriptions in the foregoing embodiments.

For the UE-to-Network relay scenario, the establishing module 2101 is specifically configured to establish an end-to-end adaptation layer between a remote UE and a network device; or, establish an end-to-end adaptation layer between a relay UE and a network device.

Specifically, the establishing module 2101 is specifically configured to add the end-to-end adaptation layer above the RLC layer of the remote UE and above the RLC layer of the network device, respectively.

Optionally, the device may be located in a remote UE. At this time, if the PDU header of the adaptation layer PDU at least includes: the bearer identifier of the remote UE on the sidelink interface: the device may further include: a first processing module, configured to, in an uplink direction, generate adaptation layer PDU for the adaptation layer of the remote UE, and deliver the adaptation layer PDU to a corresponding RLC entity according to a first mapping relationship; the first mapping relationship is the mapping relationship between the end-to-end bearer between the network device and the remote UE and the sidelink interface bearer of the remote UE; in a downlink direction, receive the adaptation layer PDU from the relay UE, and determine the bearer identifier of the end-to-end bearer between the remote UE and the network device corresponding to the adaptation layer PDU according to the bearer identifier of the remote UE on the sidelink interface and the fifth mapping relationship included in the PDU header of the adaptation layer PDU, and determine a corresponding PDCP entity; the fifth mapping relationship is the mapping relationship between the sidelink interface bearer of the remote UE and the end-to-end bearer between the remote UE and the network device.

Optionally, the device is located in the relay UE. At this time, if the PDU header of the adaptation layer PDU at least includes: the bearer identifier of the remote UE on the sidelink interface: the device may further include: a second processing module, configured to, in the uplink direction, receive the adaptation layer PDU from the remote UE, and deliver the adaptation layer PDU to an RLC entity corresponding to the Uu interface backhaul link bearer according to a second mapping relationship and the bearer identifier of the remote UE on the sidelink interface; the second mapping relationship is the mapping relationship between the sidelink interface bearer of the remote UE and the Uu interface backhaul link bearer of the remote UE; in the downlink direction, receive the adaptation layer PDU from the network device, determine the corresponding sidelink interface bearer according to the bearer identifier of the remote UE on the sidelink interface, and deliver the adaptation layer PDU to the RLC entity corresponding to the sidelink interface bearer;
Optionally, the device may be located in a network device. At this time, if the PDU header of the adaptation layer PDU at least includes: the bearer identifier of the remote UE on the sidelink interface: the device may further include: a third processing module, configured to, in the uplink direction, determine the bearer identifier of the end-to-end bearer between the remote UE and the network device corresponding to the adaptation layer PDU according to the bearer identifier of the remote UE on the sidelink interface and the third mapping relationship included in the PDU header of the adaptation layer PDU, and determine a corresponding packet data convergence protocol (PDCP) entity; the third mapping relationship is the mapping relationship between the sidelink interface bearer of the remote UE and the end-to-end bearer between the remote UE and the network device; in the downlink direction, generate an adaptation layer PDU, and deliver the adaptation layer PDU to the corresponding RLC entity according to a fourth mapping relationship; the fourth mapping relationship is a mapping relationship between the end-to-end bearer between the network device and the remote UE and the Uu interface backhaul link bearer of the remote UE;

Optionally, the device may be located in a remote UE. At this time, if the PDU header of the adaptation layer PDU at least includes: the identifier of the end-to-end bearer between the remote UE and the network device allocated by the network device to the remote UE: the device may further include: a fourth processing module, configured to, in the uplink direction, generate the adaptation layer PDU, and deliver the adaptation layer PDU to a corresponding RLC entity according to a sixth mapping relationship; the sixth mapping relationship is the mapping relationship between the end-to-end bearer between the network device and the remote UE and the sidelink interface bearer of the remote UE; in the downlink direction, receive the adaptation layer PDU from the relay UE, and determine the corresponding PDCP entity according to the identifier of the end-to-end bearer between the remote UE and the network device allocated by the network device to the remote UE included in the PDU header of the adaptation layer PDU.

Optionally, the device may be located in the relay UE. At this time, if the PDU header of the adaptation layer PDU at least includes: the identifier of the end-to-end bearer between the remote UE and the network device allocated by the network device to the remote UE: the device may further include: a fifth processing module, configured to, in the uplink direction, receive the adaptation layer PDU from the remote UE, and deliver the adaptation layer PDU to the RLC entity corresponding to the Uu interface backhaul link bearer according to a seventh mapping relationship; the seventh mapping relationship is the mapping relationship between the sidelink interface bearer of the remote UE and the Uu interface backhaul link bearer of the remote UE; in the downlink direction, receive the adaptation layer PDU from the network device, and determine the corresponding sidelink interface bearer according to the identifier of the end-to-end bearer between the remote UE and the network device allocated by the network device to the remote UE and a ninth mapping relationship, and delivers the adaptation layer PDU to the RLC entity corresponding to the sidelink interface bearer; the ninth mapping relationship is the mapping relationship between the Uu interface backhaul link bearer of the remote UE and the sidelink interface bearer of the remote UE;
Optionally, the device may be located in a network device. At this time, if the PDU header of the adaptation layer PDU at least includes: the identifier of the end-to-end bearer between the remote UE and the network device allocated by the network device to the remote UE: the device may further include: a sixth processing module, configured to, in the uplink direction, receive the adaptation layer PDU from the relay UE, determine the corresponding PDCP entity according to the bearer identifier of the end-to-end bearer between the remote UE and the network device allocated by the network device to the remote UE included in the PDU header of the adaptation layer PDU; in the downlink direction, generate the adaptation layer PDU, and deliver the adaptation layer PDU to the corresponding RLC entity according to an eighth mapping relationship; the eighth mapping relationship is a mapping relationship between the end-to-end bearer between the network device and the remote UE and the Uu interface backhaul link bearer of the remote UE.

Specifically, the establishing module 2101 is configured to add an end-to-end adaptation layer above the RLC layer of the relay UE and above the RLC layer of the network device respectively.

Optionally, the device may be located in a remote UE. If the PDU header of the adaptation layer PDU at least includes: the bearer identifier of the remote UE on the sidelink interface, the device may further include: a seventh processing module, configured to, in the uplink direction, generate a PDCP PDU, and deliver the PDCP PDU to the corresponding RLC entity according to a tenth mapping relationship; the tenth mapping relationship is the mapping relationship between that the end-to-end bearer between the remote UE and the network device and the sidelink interface bearer of the remote UE; in the downlink direction, receive the RLC PDU from the relay UE, and determine the corresponding PDCP entity according to a fourteenth mapping relationship; the fourteenth mapping relationship is the mapping relationship between the sidelink interface bearer of the remote UE and the end-to-end bearer between the remote UE and the network device.

Optionally, the device may be located in the relay UE. If the PDU header of the adaptation layer PDU at least includes: the bearer identifier of the remote UE on the sidelink interface, the device may further include: an eighth processing module, configured to, in the uplink direction, generate an adaptation layer PDU according to the PDCP PDU transmitted from the remote UE, and deliver the adaptation layer PDU to the corresponding RLC entity according to an eleventh mapping relationship; the eleventh mapping relationship is the mapping relationship between the sidelink interface bearer of the remote UE and the Uu interface backhaul link bearer of the remote UE; in the downlink direction, receive the adaptation layer PDU from the network device, remove the adaptation layer header of the adaptation layer PDU, and obtain the data packet to be processed; determine the corresponding sidelink interface bearer according to the bearer identifier of the remote UE on the sidelink interface, and deliver the to-be-processed data packet to the RLC entity corresponding to the sidelink interface bearer.

Optionally, the device may be located in the network device. If the PDU header of the adaptation layer PDU at least includes: the bearer identifier of the remote UE on the sidelink interface, the device may further include: a ninth processing module, configured to, in the uplink direction, determine the bearer identifier of the end-to-end bearer between the remote UE and the network device corresponding to the adaptation layer PDU according to the bearer identifier of the remote UE on the sidelink interface and a twelfth mapping relationship included in the PDU header of the adaptation layer PDU, and determine the corresponding PDCP entity; the twelfth mapping relationship is the mapping relationship between the sidelink interface bearer of the remote UE and the end-to-end bearer between the remote UE and the network device; in the downlink direction, generate the adaptation layer PDU, and deliver the adaptation layer PDU to the corresponding RLC entity according to a thirteenth mapping relationship; the thirteenth mapping relationship is the mapping relationship between the end-to-end bearer between the network device and the remote UE and the Uu interface backhaul link bearer of the remote UE.

Optionally, the device may be located in a remote UE. If the PDU header of the adaptation layer PDU at least includes: the identifier of the end-to-end bearer between the remote UE and the network device allocated by the network device to the remote UE: the device may further include: a tenth processing module, configured to, in the uplink direction, generate the PDCP PDU, and deliver the PDCP PDU to the corresponding RLC entity according to a fifteenth mapping relationship; the fifteenth mapping relationship is the mapping relationship between the end-to-end bearer between the remote UE and the network device and the sidelink interface bearer of the remote UE; in the downlink direction, receive the RLC PDU from the relay UE, determine the corresponding PDCP entity according to a nineteenth mapping relationship; the nineteenth mapping relationship is the mapping relationship between the sidelink interface bearer of the remote UE and the end-to-end bearer between the remote UE and the network device.

Optionally, the device may be located in the relay UE. If the PDU header of the adaptation layer PDU at least includes: the identifier of the end-to-end bearer between the remote UE and the network device allocated by the network device to the remote UE: the device may further include: an eleventh processing module, configured to, in the uplink direction, generate an adaptation layer PDU according to the PDCP PDU of the remote UE, and deliver the adaptation layer PDU to the RLC entity corresponding to the Uu interface backhaul link bearer according to a sixteenth mapping relationship; the sixteenth mapping relationship is the mapping relationship between the sidelink interface bearer of the remote UE and the bearer of the remote UE on the backhaul link of the Uu interface; in the downlink direction, receive the adaptation layer PDU of the network device, remove the adaptation layer header of the adaptation layer PDU, and obtain the data packet to be processed; determine the sidelink interface bearer corresponding to the remote UE according to an eighteenth mapping relationship, and delivers the to-be-processed data packet to the RLC entity corresponding to the sidelink interface bearer; the eighteenth mapping relationship is the relationship between the Uu interface backhaul link bearer of the remote UE and the sidelink interface bearer of the remote UE.

Alternatively, the device may be located in a network device. If the PDU header of the adaptation layer PDU at least includes: the identifier of the end-to-end bearer between the remote UE and the network device allocated by the network device to the remote UE: the device may further include: a twelfth processing module, configured to, in the uplink direction, determine the corresponding PDCP entity according to the identifier of the end-to-end bearer between the remote UE and the network device allocated by the network device to the remote UE and contained in the PDU header of the adaptation layer PDU sent by the relay UE; in the downlink direction, generate an adaptation layer PDU, and deliver the adaptation layer PDU to the corresponding RLC entity according to a seventeenth mapping relationship; the seventeenth mapping relationship is mapping relationship between the end-to-end bearer between the network device and the remote UE and the Uu interface backhaul link bearer of the remote UE.

For the UE-to-UE relay scenario, the establishing module 2101 is configured to establish an end-to-end adaptation layer between the first remote UE and the second remote UE; or establish an end-to-end adaptation layer between the second remote UEs.

Specifically, the establishing module 2101 is configured to add an end-to-end adaptation layer above the RLC layer of the first remote UE and above the RLC layer of the second remote UE respectively.

Optionally, the device may be located in the first remote UE. At this time, the device may further include: a thirteenth processing module, configured to generate an adaptation layer PDU, and determine the corresponding RLC entity when the adaptation layer PDU is transmitted between the first remote UE and the relay UE according to a twentieth mapping relationship; the twentieth mapping relationship is the mapping relationship between the sidelink end-to-end bearer between the first remote UE and the second remote UE and the sidelink interface bearer between the first remote UE and the relay UE.

Optionally, the device may be located in the relay remote UE. At this time, the apparatus may further include: a fourteenth processing module, configured to receive the adaptation layer PDU, and determine the corresponding RLC entity when the adaptation layer PDU is transmitted between the relay UE and the second remote UE according to a twenty-first mapping relationship; the twenty-first mapping relationship is a mapping relationship between the bearer of the sidelink interface between the first remote UE and the relay UE and the bearer of the sidelink interface between the relay UE and the second remote UE.

Optionally, the device may be located in the second remote UE. At this time, the device may further include: a fifteenth processing module, configured to receive the adaptation layer PDU, and determine the corresponding the PDCP entity according to the end-to-end bearer identifiers of the first remote UE and the second remote UE on the sidelink interface included in the PDU header of the adaptation layer PDU.

Specifically, the establishing module 2101 is configured to add an end-to-end adaptation layer above the RLC layer of the relay UE and above the RLC layer of the second remote UE, respectively.

Optionally, the device may be located in the first remote UE. At this time, the device may further include: a sixteenth processing module, configured to generate the PDCP PDU, and determines the RLC entity corresponding to the PDCP PDU according to a twenty-second mapping relationship; the twenty-second mapping relationship is the mapping relationship between the sidelink end-to-end bearer between the first remote UE and the second remote UE and the end-to-end bearer between the first remote UE and the relay UE;
Optionally, the device may be located in the relay remote UE. At this time, the device may further include: a seventeenth processing module, configured to generate an adaptation layer PDU according to the PDCP PDU, and determine a corresponding RLC entity when the adaptation layer PDU is transmitted between the relay UE and the second remote UE according to a twenty-third mapping relationship; the twenty-third mapping relationship is the mapping relationship between the bearer of the sidelink interface between the first remote UE and the relay UE and the bearer of the sidelink interface between the relay UE and the second remote UE.

Optionally, the device may be located in the second remote UE. At this time, the device may further include: an eighteenth processing module, configured to receives the adaptation layer PDU, and determine the corresponding PDCP entity according to the end-to-end bearer identifiers of the first remote UE and the second remote UE on the sidelink interface included in the PDU header of the adaptation layer PDU.

The device provided by the embodiment of the present disclosure can execute the foregoing method embodiments, and the implementation principles and technical effects thereof are similar, and details are not described herein again in this embodiment.

As shown in FIG. 22, the information transmission device according to the embodiment of the present disclosure includes: a processor 2200, configured to read a program in a memory 2220, and perform the following processes:
establishing an end-to-end adaptation layer in an L2 relay scenario; wherein, the functions of the adaptation layer include one or a combination of the following: routing, bearer mapping.

The transceiver 2210 is used to receive and transmit data under the control of the processor 2200.

In FIG. 22, the bus architecture may include any number of interconnected buses and bridges, specifically various circuits of one or more processors represented by processor 2200 and memory represented by memory 2220 are linked together. The bus architecture may also link together various other circuits, such as peripherals, voltage regulators, and power management circuits, which are well known in the art and, therefore, will not be described further herein. The bus interface provides the interface. Transceiver 2210 may be a number of elements, including a transmitter and a receiver that provide a means for communicating with various other devices over a transmission medium. The processor 2200 is responsible for managing the bus architecture and general processing, and the memory 2220 may store data used by the processor 2200 in performing operations.

The processor 2200 is responsible for managing the bus architecture and general processing, and the memory 2220 may store data used by the processor 2200 in performing operations.

Wherein, for the UE-to-Network relay scenario, the PDU header of the adaptation layer PDU at least includes: a bearer identifier of the remote UE on the sidelink interface, or an identifier of the end-to-end bearer between the remote UE and the network device allocated by the network device to the remote UE;

For the UE-to-UE relay scenario, the PDU header of the adaptation layer PDU at least includes: end-to-end bearer identifiers of the first remote UE and the second remote UE on the sidelink interface.

Wherein, the bearer identifier of the remote UE on the sidelink interface includes: a sidelink interface source L2 ID, a sidelink interface destination L2 ID, a sidelink interface logical channel identifier; or, the bearer identifier of the remote UE on the sidelink interface includes: the sidelink interface source L2 ID, the sidelink interface destination L2 ID, the sidelink interface bearer identifier;
The end-to-end bearer identifiers of the first remote UE and the second remote UE on the sidelink interface include: a sidelink interface source L2 ID, a sidelink interface destination L2 ID, and a sidelink interface logical channel identifier; or, the end-to-end bearer identifiers of the first remote UE and the second remote UE on the sidelink interface include: a sidelink interface source L2 ID, a sidelink interface destination L2 ID, and a sidelink interface bearer identifier.

Wherein, the PDU header of the adaptation layer PDU further includes a sidelink interface cast type identifier.

Wherein, the identifier of the end-to-end bearer between the remote UE and the network device allocated by the network device to the remote UE includes: UE identification information allocated by the network device to the remote UE, the end-to-end logical channel identifier between the remote UE and the network device; or,
The identifier of the end-to-end bearer between the remote UE and the network device allocated by the network device to the remote UE includes: UE identification information allocated by the network device to the remote UE, an identifier of the end-to-end bearer between the remote UE and the network device.

For the UE-to-Network relay scenario, the processor 2200 is further configured to read program instructions in the memory and perform the following operations:
establishing an end-to-end adaptation layer between a remote UE and a network device; or,
establishing an end-to-end adaptation layer between a relay UE and a network device.

The processor 2200 is further configured to read the program and perform the following steps:
adding the end-to-end adaptation layer above the RLC layer of the remote UE and above the RLC layer of the network device, respectively.

If the PDU header of the adaptation layer PDU at least includes: the bearer identifier of the remote UE on the sidelink interface:
If the device is applied to a remote UE, the processor 2200 is further configured to read program instructions in the memory and perform the following operations:
in an uplink direction, generating adaptation layer PDU for the adaptation layer of the remote UE, and delivering the adaptation layer PDU to a corresponding RLC entity according to a first mapping relationship; the first mapping relationship being the mapping relationship between the end-to-end bearer between the network device and the remote UE and the sidelink interface bearer of the remote UE;
in a downlink direction, receiving the adaptation layer PDU from the relay UE, and determine the bearer identifier of the end-to-end bearer between the remote UE and the network device corresponding to the adaptation layer PDU according to the bearer identifier of the remote UE on the sidelink interface and the fifth mapping relationship included in the PDU header of the adaptation layer PDU, and determining a corresponding PDCP entity; the fifth mapping relationship being the mapping relationship between the sidelink interface bearer of the remote UE and the end-to-end bearer between the remote UE and the network device.

If the device is applied to a relay UE, the processor 2200 is further configured to read program instructions in the memory and perform the following operations:
in the uplink direction, receiving the adaptation layer PDU from the remote UE, and deliver the adaptation layer PDU to an RLC entity corresponding to the Uu interface backhaul link bearer according to a second mapping relationship and the bearer identifier of the remote UE on the sidelink interface; the second mapping relationship being the mapping relationship between the sidelink interface bearer of the remote UE and the Uu interface backhaul link bearer of the remote UE;
in the downlink direction, receiving the adaptation layer PDU from the network device, determining the corresponding sidelink interface bearer according to the bearer identifier of the remote UE on the sidelink interface, and delivering the adaptation layer PDU to the RLC entity corresponding to the sidelink interface bearer;

If the device is applied to a network device, the processor 2200 is further configured to read program instructions in the memory and perform the following operations:
in the uplink direction, determining the bearer identifier of the end-to-end bearer between the remote UE and the network device corresponding to the adaptation layer PDU according to the bearer identifier of the remote UE on the sidelink interface and the third mapping relationship included in the PDU header of the adaptation layer PDU, and determining a corresponding packet data convergence protocol (PDCP) entity; the third mapping relationship being the mapping relationship between the sidelink interface bearer of the remote UE and the end-to-end bearer between the remote UE and the network device;
in the downlink direction, generating an adaptation layer PDU, and delivering the adaptation layer PDU to the corresponding RLC entity according to a fourth mapping relationship; the fourth mapping relationship being a mapping relationship between the end-to-end bearer between the network device and the remote UE and the Uu interface backhaul link bearer of the remote UE;

If the PDU header of the adaptation layer PDU at least includes: the identifier of the end-to-end bearer between the remote UE and the network device allocated by the network device to the remote UE:
If the device is applied to a remote UE, the processor 2200 is further configured to read program instructions in the memory and perform the following operations:
in the uplink direction, generating the adaptation layer PDU, and delivering the adaptation layer PDU to a corresponding RLC entity according to a sixth mapping relationship; the sixth mapping relationship being the mapping relationship between the end-to-end bearer between the network device and the remote UE and the sidelink interface bearer of the remote UE;
in the downlink direction, receiving the adaptation layer PDU from the relay UE, and determining the corresponding PDCP entity according to the identifier of the end-to-end bearer between the remote UE and the network device allocated by the network device to the remote UE included in the PDU header of the adaptation layer PDU.

If the device is applied to a relay UE, the processor 2200 is further configured to read program instructions in the memory and perform the following operations:
in the uplink direction, receiving the adaptation layer PDU from the remote UE, and deliver the adaptation layer PDU to the RLC entity corresponding to the Uu interface backhaul link bearer according to a seventh mapping relationship; the seventh mapping relationship being the mapping relationship between the sidelink interface bearer of the remote UE and the Uu interface backhaul link bearer of the remote UE;
in the downlink direction, receive the adaptation layer PDU from the network device, and determining the corresponding sidelink interface bearer according to the identifier of the end-to-end bearer between the remote UE and the network device allocated by the network device to the remote UE and a ninth mapping relationship, and delivering the adaptation layer PDU to the RLC entity corresponding to the sidelink interface bearer; the ninth mapping relationship being the mapping relationship between the Uu interface backhaul link bearer of the remote UE and the sidelink interface bearer of the remote UE;

If the device is applied to a network device, the processor 2200 is further configured to read program instructions in the memory and perform the following operations:
in the uplink direction, receiving the adaptation layer PDU from the relay UE, determining the corresponding PDCP entity according to the bearer identifier of the end-to-end bearer between the remote UE and the network device allocated by the network device to the remote UE included in the PDU header of the adaptation layer PDU;
in the downlink direction, generating the adaptation layer PDU, and delivering the adaptation layer PDU to the corresponding RLC entity according to an eighth mapping relationship; the eighth mapping relationship being a mapping relationship between the end-to-end bearer between the network device and the remote UE and the Uu interface backhaul link bearer of the remote UE.

Wherein, the processor 2200 is further configured to read program instructions in the memory and perform the following operations:
Adding an end-to-end adaptation layer above the RLC layer of the relay UE and above the RLC layer of the network device.

If the PDU header of the adaptation layer PDU at least includes: the bearer identifier of the remote UE on the sidelink interface:
If the device is applied to a remote UE, the processor 2200 is further configured to read program instructions in the memory and perform the following operations:
in the uplink direction, generating a PDCP PDU, and delivering the PDCP PDU to the corresponding RLC entity according to a tenth mapping relationship; the tenth mapping relationship being the mapping relationship between that the end-to-end bearer between the remote UE and the network device and the sidelink interface bearer of the remote UE;
in the downlink direction, receiving the RLC PDU from the relay UE, and determining the corresponding PDCP entity according to a fourteenth mapping relationship; the fourteenth mapping relationship being the mapping relationship between the sidelink interface bearer of the remote UE and the end-to-end bearer between the remote UE and the network device.

If the device is applied to a relay UE, the processor 2200 is further configured to read program instructions in the memory and perform the following operations:
in the uplink direction, generating an adaptation layer PDU according to the PDCP PDU transmitted from the remote UE, and delivering the adaptation layer PDU to the corresponding RLC entity according to an eleventh mapping relationship; the eleventh mapping relationship being the mapping relationship between the sidelink interface bearer of the remote UE and the Uu interface backhaul link bearer of the remote UE;
in the downlink direction, receiving the adaptation layer PDU from the network device, removing the adaptation layer header of the adaptation layer PDU, and obtaining the data packet to be processed; determining the corresponding sidelink interface bearer according to the bearer identifier of the remote UE on the sidelink interface, and delivering the to-be-processed data packet to the RLC entity corresponding to the sidelink interface bearer.

If the device is applied to a network device, the processor 2200 is further configured to read program instructions in the memory and perform the following operations:
in the uplink direction, determining the bearer identifier of the end-to-end bearer between the remote UE and the network device corresponding to the adaptation layer PDU according to the bearer identifier of the remote UE on the sidelink interface and a twelfth mapping relationship included in the PDU header of the adaptation layer PDU, and determining the corresponding PDCP entity; the twelfth mapping relationship being the mapping relationship between the sidelink interface bearer of the remote UE and the end-to-end bearer between the remote UE and the network device;
in the downlink direction, generating the adaptation layer PDU, and delivering the adaptation layer PDU to the corresponding RLC entity according to a thirteenth mapping relationship; the thirteenth mapping relationship being the mapping relationship between the end-to-end bearer between the network device and the remote UE and the Uu interface backhaul link bearer of the remote UE.

If the PDU header of the adaptation layer PDU at least includes: the identifier of the end-to-end bearer between the remote UE and the network device allocated by the network device to the remote UE:
If the device is applied to a remote UE, the processor 2200 is further configured to read program instructions in the memory and perform the following operations:
in the uplink direction, generating the PDCP PDU, and deliver the PDCP PDU to the corresponding RLC entity according to a fifteenth mapping relationship; the fifteenth mapping relationship being the mapping relationship between the end-to-end bearer between the remote UE and the network device and the sidelink interface bearer of the remote UE;
in the downlink direction, receiving the RLC PDU from the relay UE, determining the corresponding PDCP entity according to a nineteenth mapping relationship; the nineteenth mapping relationship being the mapping relationship between the sidelink interface bearer of the remote UE and the end-to-end bearer between the remote UE and the network device.

If the device is applied to a relay UE, the processor 2200 is further configured to read program instructions in the memory and perform the following operations:
in the uplink direction, generating an adaptation layer PDU according to the PDCP PDU of the remote UE, and delivering the adaptation layer PDU to the RLC entity corresponding to the Uu interface backhaul link bearer according to a sixteenth mapping relationship; the sixteenth mapping relationship being the mapping relationship between the sidelink interface bearer of the remote UE and the bearer of the remote UE on the backhaul link of the Uu interface;
in the downlink direction, receiving the adaptation layer PDU of the network device, removing the adaptation layer header of the adaptation layer PDU, and obtaining the data packet to be processed; determining the sidelink interface bearer corresponding to the remote UE according to an eighteenth mapping relationship, and delivering the to-be-processed data packet to the RLC entity corresponding to the sidelink interface bearer; the eighteenth mapping relationship being the relationship between the Uu interface backhaul link bearer of the remote UE and the sidelink interface bearer of the remote UE.

If the device is applied to a network device, the processor 2200 is further configured to read program instructions in the memory and perform the following operations:
in the uplink direction, determining the corresponding PDCP entity according to the identifier of the end-to-end bearer between the remote UE and the network device allocated by the network device to the remote UE and contained in the PDU header of the adaptation layer PDU sent by the relay UE;
in the downlink direction, generating an adaptation layer PDU, and delivering the adaptation layer PDU to the corresponding RLC entity according to a seventeenth mapping relationship; the seventeenth mapping relationship being mapping relationship between the end-to-end bearer between the network device and the remote UE and the Uu interface backhaul link bearer of the remote UE.

For the UE-to-UE relay scenario, the processor 2200 is further configured to read program instructions in the memory and perform the following operations:
establishing an end-to-end adaptation layer between the first remote UE and the second remote UE; or
establishing an end-to-end adaptation layer between the relay UE and the second remote UE.

The processor 2200 is further configured to read program instructions in the memory and perform the following operations:
adding an end-to-end adaptation layer above the RLC layer of the first remote UE and above the RLC layer of the second remote UE respectively.

If the device is applied to the first remote UE, the processor 2200 is further configured to read program instructions in the memory and perform the following operations:
generating an adaptation layer PDU, and determining the corresponding RLC entity when the adaptation layer PDU is transmitted between the first remote UE and the relay UE according to a twentieth mapping relationship; the twentieth mapping relationship being the mapping relationship between the sidelink end-to-end bearer between the first remote UE and the second remote UE and the sidelink interface bearer between the first remote UE and the relay UE.

If the device is applied to a relay UE, the processor 2200 is further configured to read program instructions in the memory and perform the following operations:
receiving the adaptation layer PDU, and determining the corresponding RLC entity when the adaptation layer PDU is transmitted between the relay UE and the second remote UE according to a twenty-first mapping relationship; the twenty-first mapping relationship being a mapping relationship between the bearer of the sidelink interface between the first remote UE and the relay UE and the bearer of the sidelink interface between the relay UE and the second remote UE.

If the device is applied to the second remote UE, the processor 2200 is further configured to read program instructions in the memory and perform the following operations:
receiving the adaptation layer PDU, and determining the corresponding the PDCP entity according to the end-to-end bearer identifiers of the first remote UE and the second remote UE on the sidelink interface included in the PDU header of the adaptation layer PDU.

The processor 2200 is further configured to read program instructions in the memory and perform the following operations:
adding an end-to-end adaptation layer above the RLC layer of the relay UE and above the RLC layer of the second remote UE, respectively.

If the device is applied to the first remote UE, the processor 2200 is further configured to read program instructions in the memory and perform the following operations:
generating the PDCP PDU, and determining the RLC entity corresponding to the PDCP PDU according to a twenty-second mapping relationship; the twenty-second mapping relationship being the mapping relationship between the sidelink end-to-end bearer between the first remote UE and the second remote UE and the end-to-end bearer between the first remote UE and the relay UE;
If the device is applied to a relay UE, the processor 2200 is further configured to read program instructions in the memory and perform the following operations:
   generating an adaptation layer PDU according to the PDCP PDU, and determining a corresponding RLC entity when the adaptation layer PDU is transmitted between the relay UE and the second remote UE according to a twenty-third mapping relationship; the twenty-third mapping relationship being the mapping relationship between the bearer of the sidelink interface between the first remote UE and the relay UE and the bearer of the sidelink interface between the relay UE and the second remote UE.

If the device is applied to the second remote UE, the processor 2200 is further configured to read program instructions in the memory and perform the following operations:
receiving the adaptation layer PDU, and determining the corresponding PDCP entity according to the end-to-end bearer identifiers of the first remote UE and the second remote UE on the sidelink interface included in the PDU header of the adaptation layer PDU.

The device provided by the embodiment of the present disclosure can execute the above method embodiments, and the implementation principles and technical effects thereof are similar, and details are not described herein again in this embodiment.

Embodiments of the present disclosure further provide a computer-readable storage medium, where a computer program is stored on the computer-readable storage medium. When the computer program is executed by a processor, each process of the foregoing information transmission method embodiments can be implemented, and the same effect can be achieved, which is not repeated here to avoid repetition. The computer-readable storage medium is, for example, a read-only memory (ROM), a random access memory (RAM), a magnetic disk, or an optical disk.

It should be noted that, herein, the terms "comprising", "including" or any other variation thereof are intended to encompass non-exclusive inclusion, such that a process, method, article or device comprising a series of elements includes not only those elements, It also includes other elements not expressly listed or inherent to such a process, method, article or device. Without further limitation, an element qualified by the phrase "comprising a..." does not preclude the presence of additional identical elements in a process, method, article or device that includes the element.

From the description of the above embodiments, those skilled in the art can clearly understand that the method of the above embodiment can be implemented by means of software plus a necessary general hardware platform, and of course can also be implemented by hardware, but in many cases the former is better implementation. According to this understanding, the technical solutions of the present disclosure can be embodied in the form of software products in essence, or the parts that make contributions to related technologies. The computer software products are stored in a storage medium (such as ROM/RAM, magnetic disk, optical disk) ), including several instructions to make a terminal (which may be a mobile phone, a computer, a server, an air conditioner, or a network device, etc.) execute the methods described in the various embodiments of the present disclosure.

It should be noted that that the division of the above modules is only a division of logical functions, and in actual implementation, all or part of modules may be integrated into a physical entity, or may be physically separated. And these modules can all be implemented in the form of software called by processing elements; they can also all be implemented in hardware; some modules can also be implemented in the form of calling software by processing elements, and some modules can be implemented in hardware. For example, the determination module may be a separately established processing element, or may be integrated into a certain chip of the above-mentioned device to be implemented, in addition, it may also be stored in the memory of the above-mentioned device in the form of program code, and a certain processing element of the above-mentioned device may call and execute the function of the above determined module. The implementation of other modules is similar. In addition, all or part of these modules can be integrated together, and can also be implemented independently. The processing element described here may be an integrated circuit with signal processing capability. In the implementation process, each step of the above-mentioned method or each of the above-mentioned modules can be completed by an integrated logic circuit of hardware in the processor element or an instruction in the form of software.

For example, each module, unit, sub-unit or sub-module may be one or more integrated circuits configured to implement the above method, such as: one or more Application Specific Integrated Circuits (ASIC), or, one or more microprocessors (digital signal processors, DSP), or, one or more field programmable gate arrays (FPGA), etc. For another example, when one of the above modules is implemented in the form of a processing element calling program code, the processing element may be a general-purpose processor, such as a central processing unit (CPU) or other processors that can invoke program codes. For another example, these modules can be integrated together and implemented in the form of a system-on-a-chip (SOC).

The terms "first", "second", etc. in the description and claims of the present disclosure are used to distinguish similar objects, and are not necessarily used to describe a specific order or sequence. It is to be understood that the data can be interchanged under appropriate circumstances such that the embodiments of the disclosure described herein are implemented in sequences other than those illustrated or described herein, for example. Furthermore, the terms "comprising" and "having", and any variations thereof, are intended to cover non-exclusive inclusion, for example, a process, method, system, product or device comprising a series of steps or units is not necessarily limited to those expressly listed, those steps or units may include other steps or units not expressly listed or inherent to these processes, methods, products or devices. In addition, the use of "and/or" in the specification and the claims means at least one of the linked objects, such as A and/or B and/or C, is meant to include A alone, B alone, C alone, and both A and B, B and C, A and C, and A, B, and C. Similarly, the use of "at least one of A and B" in this disclosure and in the claims should be understood to mean "A alone, B alone, or both A and B present."

The above are optional embodiments of the present disclosure. It should be pointed out that for those skilled in the art, several improvements and modifications can be made without departing from the principles described in the present disclosure. These improvements and modifications should also be fall in the protection scope of the present disclosure.

### Aspects:

Aspect 1. An information transmission method, comprising:
   in a layer 2 (L2) relay scenario, establishing an end-to-end adaptation layer; wherein, a function of the end-to-end adaptation layer includes one or a combination of routing and bearer mapping.
Aspect 2. The method according to aspect 1, comprising:
   for a UE-to-Network relay scenario, a protocol data unit (PDU) header of a adaptation layer PDU at least including: a bearer identifier of a remote UE on a sidelink interface, or an identifier of an end-to-end bearer between the remote UE and a network device allocated by the network device to the remote UE;
   for a UE-to-UE relay scenario, the PDU header of the adaptation layer PDU at least including: end-to-end bearer identifiers of a first remote UE and a second remote UE on the sidelink interface.
Aspect 3. The method according to aspect 2, wherein,
   the bearer identifier of the remote UE on the sidelink interface includes: a sidelink interface source L2 ID, a sidelink interface destination L2 ID, and a sidelink interface logical channel identifier; or, the bearer identifier of the remote UE on the sidelink interface includes: the sidelink interface source L2 ID, the sidelink interface destination L2 ID, and a sidelink interface bearer identifier;
   the end-to-end bearer identifiers of the first remote UE and the second remote UE on the sidelink interface include: the sidelink interface source L2 ID, the sidelink interface destination L2 ID, and the sidelink interface logical channel identifier; or, the end-to-end bearer identifiers of the first remote UE and the second remote UE on the sidelink interface include: the sidelink interface source L2 ID, the sidelink interface destination L2 ID, and the sidelink interface bearer identifier.
Aspect 4. The method according to aspect 3, wherein the PDU header of the adaptation layer PDU further comprises a sidelink interface cast type identifier.
Aspect 5. The method according to aspect 2, wherein,
   the identifier of the end-to-end bearer between the remote UE and the network device allocated by the network device to the remote UE includes: UE identification information allocated by the network device to the remote UE, an end-to-end logical channel identifier between the remote UE and the network device; or,
   the identifier of the end-to-end bearer identifier between the remote UE and the network device allocated by the network device to the remote UE includes: the UE identification information allocated by the network device to the remote UE, an end-to-end bearer identifier between the remote UE and the network device.
Aspect 6. The method according to any one of aspects 1-5, wherein, for a UE-to-Network relay scenario, the establishing an end-to-end adaptation layer includes:
   establishing the end-to-end adaptation layer between the remote UE and the network device; or,
   establishing the end-to-end adaptation layer between a relay UE and the network device.
Aspect 7. The method according to aspect 6, wherein the establishing the end-to-end adaptation layer between the remote UE and the network device comprises:
   adding the end-to-end adaptation layer above a radio link control (RLC) layer of the remote UE and above an RLC layer of the network device.
Aspect 8. The method according to aspect 7, further comprising:
   if the PDU header of the adaptation layer PDU at least includes: the bearer identifier of the remote UE on the sidelink interface:
   in the uplink direction, generating, by the adaptation layer of the remote UE, the adaptation layer PDU, and delivering the adaptation layer PDU to a corresponding RLC entity according to a first mapping relationship; the first mapping relationship being a mapping relationship between the end-to-end bearer between the network device and the remote UE and the sidelink interface bearer of the remote UE;
   receiving, by the relay UE, the adaptation layer PDU, and delivering the adaptation layer PDU to an RLC entity corresponding to a Uu interface backhaul link bear according to a second mapping relationship and the bearer identifier of the remote UE on the sidelink interface; the second mapping relationship being a mapping relationship between a sidelink interface bearer of the remote UE and a Uu interface backhaul link bear of the remote UE;
   determining, by the network device, the bearer identifier of the end-to-end bearer between the remote UE and the network device corresponding to the adaptation layer PDU according to a third mapping relationship and the bearer identifier of the remote UE on the sidelink interface included in the PDU header of the adaptation layer PDU, and determining a corresponding packet data convergence protocol (PDCP) entity; the third mapping relationship being a mapping relationship between the sidelink interface bearer of the remote UE and the end-to-end bearer between the remote UE and the network device.
Aspect 9. The method according to aspect 7, further comprising:
   If the PDU header of the adaptation layer PDU at least includes: the bearer identifier of the remote UE on the sidelink interface:
   in the downlink direction, generating, by the adaptation layer of the network device, the adaptation layer PDU, and delivering the adaptation layer PDU to the corresponding RLC entity according to a fourth mapping relationship; the fourth mapping relationship being a mapping relationship between the end-to-end bearer between the network device and the remote UE and the Uu interface backhaul link bear of the remote UE;
   receiving, by the relay UE, the adaptation layer PDU, determining a corresponding sidelink interface bearer according to the bearer identifier of the remote UE on the sidelink interface, and delivering the adaptation layer PDU to the RLC entity corresponding to the sidelink interface bearer;
   receiving, by the remote UE, the adaptation layer PDU, and determining the bearer identifier of the end-to-end bearer between the remote UE and the network device corresponding to the adaptation layer PDU according to a fifth mapping relationship and the bearer identifier of the remote UE on the sidelink interface included in the PDU header of the adaptation layer PDU, and determining a corresponding PDCP entity; the fifth mapping relationship being a mapping relationship between the sidelink interface bearer of the remote UE and the end-to-end bearer between the remote UE and the network device.
Aspect 10. The method according to aspect 7, further comprising:
   if the PDU header of the adaptation layer PDU at least includes: the identifier of the end-to-end bearer between the remote UE and the network device allocated by the network device to the remote UE:
   in the uplink direction, generating, by the adaptation layer of the remote UE, the adaptation layer PDU, and delivering the adaptation layer PDU to a corresponding RLC entity according to a sixth mapping relationship; the sixth mapping relationship being a mapping relationship between the end-to-end bearer between the network device and the remote UE and the sidelink interface bearer of the remote UE;
   receiving, by the relay UE, the adaptation layer PDU, and delivering the adaptation layer PDU to an RLC entity corresponding to the Uu interface backhaul link bear according to a seventh mapping relationshipe; the seventh mapping relationship being a mapping relationship between the sidelink interface bearer of the remote UE and the Uu interface backhaul link bear of the remote UE;
   receiving, by the network device, the adaptation layer PDU and determining the corresponding PDCP entity according to the identifier of the end-to-end bearer between the remote UE and the network device allocated by the network device to the remote UE included in the PDU header of the adaptation layer PDU.
Aspect 11. The method according to aspect 7, further comprising:
   if the PDU header of the adaptation layer PDU at least includes: the identifier of the end-to-end bearer between the remote UE and the network device allocated by the network device to the remote UE:
   in the downlink direction, generating, by the adaptation layer of the network device, the adaptation layer PDU, and delivering the adaptation layer PDU to the corresponding RLC entity according to an eighth mapping relationship; the eighth mapping relationship being a mapping relationship between the end-to-end bearer between the network device and the remote UE and the Uu interface backhaul link bear of the remote UE;
   receiving, by the relay UE, the adaptation layer PDU, and determining the corresponding sidelink interface bearer according to the identifier of the end-to-end bearer between the remote UE and the network device allocated by the network device to the remote UE and a ninth mapping relationship, and delivering the adaptation layer PDU to the RLC entity corresponding to the sidelink interface bearer; the ninth mapping relationship being a mapping relationship between the Uu interface backhaul link bear of the remote UE and the sidelink interface bearer of the remote UE;
   receiving, by the remote UE, the adaptation layer PDU, and determining the corresponding PDCP entity according to the identifier of the end-to-end bearer between the remote UE and the network device allocated by the network device to the remote UE included in the PDU header of the adaptation layer PDU.
Aspect 12. The method according to aspect 6, wherein the establishing the end-to-end adaptation layer between the relay UE and the network device comprises:
   adding the end-to-end adaptation layer above the RLC layer of the relay UE and above the RLC layer of the network devices respectively.
Aspect 13. The method according to aspect 12, further comprising:
   if the PDU header of the adaptation layer PDU at least includes: the bearer identifier of the remote UE on the sidelink interface:
   in the uplink direction, generating, by the remote UE, a PDCP PDU, and delivering the PDCP PDU to a corresponding RLC entity according to a tenth mapping relationship; the tenth mapping relationship being a mapping relationship between that the end-to-end bearer between the remote UE and the network device and the sidelink interface bear of the remote UE;
   generating, by the relay UE, the adaptation layer PDU according to the PDCP PDU, and delivering the adaptation layer PDU to the corresponding RLC entity according to an eleventh mapping relationship; the eleventh mapping relationship being a mapping relationship between the sidelink interface bear of the remote UE and the Uu interface backhaul link bearer of the remote UE;
   determining, by the network device, the bear identifier of the end-to-end bear between the remote UE and the network device corresponding to the adaptation layer PDU according to a twelfth mapping relationship and the bearer identifier of the remote UE on the sidelink interface included in the PDU header of the adaptation layer PDU, and determining the corresponding PDCP entity; the twelfth mapping relationship being a mapping relationship between the sidelink interface bearer of the remote UE and the end-to-end bearer between the remote UE and the network device.
Aspect 14. The method according to aspect 12, further comprising:
   if the PDU header of the adaptation layer PDU at least includes: the bearer identifier of the remote UE on the sidelink interface:
   in the downlink direction, generating, by the adaptation layer of the network device, the adaptation layer PDU, and delivering the adaptation layer PDU to the corresponding RLC entity according to a thirteenth mapping relationship; the thirteenth mapping relationship being a mapping relationship between the end-to-end bearer between the network device and the remote UE and the Uu interface backhaul link bear of the remote UE;
   receiving, by the relay UE, the adaptation layer PDU, removing an adaptation layer header of the adaptation layer PDU, and obtaining a to-be-processed data packet; determining the corresponding sidelink interface bearer according to the bearer identifier of the remote UE on the sidelink interface, and delivering the to-be-processed data packet to the RLC entity corresponding to the sidelink interface bearer;
   receiving, by the remote UE, the RLC PDU, and determining the corresponding PDCP entity according to a fourteenth mapping relationship; the fourteenth mapping relationship being a mapping relationship between the sidelink interface bearer of the remote UE and the end-to-end bear between the remote UE and the network device.
Aspect 15. The method according to aspect 12, further comprising:
   if the PDU header of the adaptation layer PDU at least includes: the identifier of the end-to-end bearer between the remote UE and the network device allocated by the network device to the remote UE:
   in the uplink direction, generating, by the remote UE, the PDCP PDU, and delivering the PDCP PDU to the corresponding RLC entity according to a fifteenth mapping relationship; the fifteenth mapping relationship being a mapping relationship between the end-to-end bearer between the remote UE and the network device and the sidelink interface bearer of the remote UE;
   generating, by the relay UE, the adaptation layer PDU according to the PDCP PDU, and delivering the adaptation layer PDU to the RLC entity corresponding to the Uu interface backhaul link bearer according to a sixteenth mapping relationship; the sixteenth mapping relationship being a mapping relationship between the sidelink interface bearer of the remote UE and the Uu interface backhaul link bearer of the remote UE;
   determining, by the network device, the corresponding PDCP entity according to the identifier of the end-to-end bearer between the remote UE and the network device allocated by the network device to the remote UE and contained in the PDU header of the adaptation layer PDU.
Aspect 16. The method according to aspect 12, further comprising:
   if the PDU header of the adaptation layer PDU at least includes: the identifier of the end-to-end bearer between the remote UE and the network device allocated by the network device to the remote UE:
   in the downlink direction, generating by the adaptation layer of the network device, the adaptation layer PDU, and delivering the adaptation layer PDU to the corresponding RLC entity according to a seventeenth mapping relationship; the seventeenth mapping relationship is a mapping relationship between the end-to-end bearer between the network device and the remote UE and the Uu interface backhaul link bear of the remote UE;
   receiving, by the relay UE, the adaptation layer PDU, removing the adaptation layer header of the adaptation layer PDU, and obtaining a to-be-processed data packet; determining the sidelink interface bearer corresponding to the remote UE according to an eighteenth mapping relationship, and delivering the to-be-processed data packet to the RLC entity corresponding to the sidelink interface bearer; the eighteenth mapping relationship being a mapping relationship between the Uu interface backhaul link bearer of the remote UE and the sidelink interface bearer of the remote UE;
   receiving, by the remote UE, the RLC PDU, determining the corresponding PDCP entity according to a nineteenth mapping relationship; the nineteenth mapping relationship being a mapping relationship between the sidelink interface bearer of the remote UE and the end-to-end bearer between the remote UE and the network device.
Aspect 17. The method according to aspect 2, wherein, for the UE-to-UE relay scenario, the establishing an end-to-end adaptation layer comprises:
   establishing the end-to-end adaptation layer between the first remote UE and the second remote UE; or,
   establishing the end-to-end adaptation layer between the relay UE and the second remote UE.
Aspect 18. The method according to aspect 17, wherein the establishing the end-to-end adaptation layer between the first remote UE and the second remote UE comprises:
   adding the end-to-end adaptation layer above the RLC layer of the first remote UE and above the RLC layer of the second remote UE respectively.
Aspect 19. The method according to aspect 18, further comprising:
   generating, by an adaptation layer of the first remote UE, an adaptation layer PDU, and determining a corresponding RLC entity when the adaptation layer PDU is transmitted between the first remote UE and the relay UE according to a twentieth mapping relationship; the twentieth mapping relationship being a mapping relationship between a sidelink end-to-end bearer between the first remote UE and the second remote UE and a sidelink interface bearer between the first remote UE and the relay UE;
   receiving, by the relay UE, the adaptation layer PDU, and determining the corresponding RLC entity when the adaptation layer PDU is transmitted between the relay UE and the second remote UE according to a twenty-first mapping relationship; the twenty-first mapping relationship being a mapping relationship between the sidelink interface bearer between the first remote UE and the relay UE and the sidelink interface bear between the relay UE and the second remote UE;
   receiving, by the second remote UE, the adaptation layer PDU, and determining the corresponding the PDCP entity according to the end-to-end bearer identifiers of the first remote UE and the second remote UE on the sidelink interface included in the PDU header of the adaptation layer PDU.
Aspect 20. The method according to aspect 17, wherein the establishing the end-to-end adaptation layer between the first remote UE and the second remote UE comprises:
   adding the end-to-end adaptation layer above the RLC layer of the relay UE and above the RLC layer of the second remote UE respectively.
Aspect 21. The method according to aspect 20, further comprising:
   generating, by the first remote UE, the PDCP PDU, and determining the RLC entity corresponding to the PDCP PDU according to a twenty-second mapping relationship; the twenty-second mapping relationship being a mapping relationship between the sidelink end-to-end bearer between the first remote UE and the second remote UE and the end-to-end bearer between the first remote UE and the relay UE;
   generating, by the relay UE, the adaptation layer PDU according to the PDCP PDU, and determining a corresponding RLC entity when the adaptation layer PDU is transmitted between the relay UE and the second remote UE according to a twenty-third mapping relationship; the twenty-third mapping relationship being a mapping relationship between the sidelink interface bear between the first remote UE and the relay UE and the sidelink interface bear between the relay UE and the second remote UE;
   receiving, by the second remote UE, the adaptation layer PDU, and determining the corresponding PDCP entity according to the end-to-end bearer identifiers of the first remote UE and the second remote UE on the sidelink interface included in the PDU header of the adaptation layer PDU.
Aspect 22. An information transmission device, comprising:
   an establishing module, configured to establish an end-to-end adaptation layer in an L2 relay scenario; wherein, a function of the adaptation layer includes one or a combination: routing, bearer mapping.
Aspect 23. The device according to aspect 22, wherein,
   for a UE-to-Network relay scenario, a protocol data unit (PDU) header of a adaptation layer PDU at least including: a bearer identifier of a remote UE on a sidelink interface, or an identifier of an end-to-end bearer between the remote UE and a network device allocated by the network device to the remote UE;
   for a UE-to-UE relay scenario, the PDU header of the adaptation layer PDU at least including: end-to-end bearer identifiers of a first remote UE and a second remote UE on the sidelink interface.
Aspect 24. The device according to aspect 23, wherein,
   the bearer identifier of the remote UE on the sidelink interface includes: a sidelink interface source L2 ID, a sidelink interface destination L2 ID, and a sidelink interface logical channel identifier; or, the bearer identifier of the remote UE on the sidelink interface includes: the sidelink interface source L2 ID, the sidelink interface destination L2 ID, and a sidelink interface bearer identifier;
   the end-to-end bearer identifiers of the first remote UE and the second remote UE on the sidelink interface include: the sidelink interface source L2 ID, the sidelink interface destination L2 ID, and the sidelink interface logical channel identifier; or, the end-to-end bearer identifiers of the first remote UE and the second remote UE on the sidelink interface include: the sidelink interface source L2 ID, the sidelink interface destination L2 ID, and the sidelink interface bearer identifier.
Aspect 25. The device according to aspect 23, wherein,
   the identifier of the end-to-end bearer between the remote UE and the network device allocated by the network device to the remote UE includes: UE identification information allocated by the network device to the remote UE, an end-to-end logical channel identifier between the remote UE and the network device; or,
   the identifier of the end-to-end bearer identifier between the remote UE and the network device allocated by the network device to the remote UE includes: the UE identification information allocated by the network device to the remote UE, an end-to-end bearer identifier between the remote UE and the network device.
Aspect 26. The device according to any one of aspects 22-25, wherein, for a UE-to-Network relay scenario, the establishing module is further configured to:
   establish the end-to-end adaptation layer between the remote UE and the network device; or,
   establish the end-to-end adaptation layer between a relay UE and the network device.
Aspect 27. The device according to aspect 23, wherein, for a UE-to-UE relay scenario, the establishing module is further configured to:
   establishing the end-to-end adaptation layer between a first remote UE and a second remote UE; or,
   establishing the end-to-end adaptation layer between a relay UE and the second remote UE.
Aspect 28. An information transmission device comprising: a transceiver, a memory, a processor, and a program stored on the memory and executed by the processor; wherein the processor is configured to read program instructions in the memory and perform the following operations:
   in a layer 2 (L2) relay scenario, establishing an end-to-end adaptation layer; wherein, a function of the end-to-end adaptation layer includes one or a combination of routing and bearer mapping.
Aspect 29. The device according to aspect 28, wherein,
   for a UE-to-Network relay scenario, a protocol data unit (PDU) header of a adaptation layer PDU at least including: a bearer identifier of a remote UE on a sidelink interface, or an identifier of an end-to-end bearer between the remote UE and a network device allocated by the network device to the remote UE;
   for a UE-to-UE relay scenario, the PDU header of the adaptation layer PDU at least including: end-to-end bearer identifiers of a first remote UE and a second remote UE on the sidelink interface.
Aspect 30. The device according to aspect 29, wherein,
   the bearer identifier of the remote UE on the sidelink interface includes: a sidelink interface source L2 ID, a sidelink interface destination L2 ID, and a sidelink interface logical channel identifier; or, the bearer identifier of the remote UE on the sidelink interface includes: the sidelink interface source L2 ID, the sidelink interface destination L2 ID, and a sidelink interface bearer identifier;
   the end-to-end bearer identifiers of the first remote UE and the second remote UE on the sidelink interface include: the sidelink interface source L2 ID, the sidelink interface destination L2 ID, and the sidelink interface logical channel identifier; or, the end-to-end bearer identifiers of the first remote UE and the second remote UE on the sidelink interface include: the sidelink interface source L2 ID, the sidelink interface destination L2 ID, and the sidelink interface bearer identifier.
Aspect 31. The device according to aspect 30, wherein the PDU header of the adaptation layer PDU further includes a sidelink interface cast type identifier.
Aspect 32. The device according to aspect 30, wherein,
   the identifier of the end-to-end bearer between the remote UE and the network device allocated by the network device to the remote UE includes: UE identification information allocated by the network device to the remote UE, an end-to-end logical channel identifier between the remote UE and the network device; or,
   the identifier of the end-to-end bearer identifier between the remote UE and the network device allocated by the network device to the remote UE includes: the UE identification information allocated by the network device to the remote UE, an end-to-end bearer identifier between the remote UE and the network device.
Aspect 33. The device according to any one of aspects 28-32, wherein, for a UE-to-Network relay scenario, the processor is further configured to read program instructions in the memory and perform the following operations:
   establishing the end-to-end adaptation layer between the remote UE and the network device; or,
   establishing the end-to-end adaptation layer between a relay UE and the network device.
Aspect 34. The device according to aspect 33, wherein the processor is further configured to read program instructions in the memory and perform the following operations:
   adding the end-to-end adaptation layer above a radio link control (RLC) layer of the remote UE and above an RLC layer of the network device.
Aspect 35. The device according to aspect 34, wherein, if the PDU header of the adaptation layer PDU at least includes: the bearer identifier of the remote UE on the sidelink interface:
   if the device is applied to a remote UE, the processor is further configured to read program instructions in the memory and perform the following operations:
   in the uplink direction, generating, by the adaptation layer of the remote UE, the adaptation layer PDU, and delivering the adaptation layer PDU to a corresponding RLC entity according to a first mapping relationship; the first mapping relationship being a mapping relationship between the end-to-end bearer between the network device and the remote UE and the sidelink interface bearer of the remote UE;
   in a downlink direction, receiving, by the remote UE, the adaptation layer PDU, and determining the bearer identifier of the end-to-end bearer between the remote UE and the network device corresponding to the adaptation layer PDU according to a fifth mapping relationship and the bearer identifier of the remote UE on the sidelink interface included in the PDU header of the adaptation layer PDU, and determining a corresponding PDCP entity; the fifth mapping relationship being a mapping relationship between the sidelink interface bearer of the remote UE and the end-to-end bearer between the remote UE and the network device;
   if the device is used in a relay UE, the processor is further configured to read program instructions in the memory and perform the following operations:
      in the uplink direction, receiving, by the relay UE, the adaptation layer PDU, and delivering the adaptation layer PDU to an RLC entity corresponding to a Uu interface backhaul link bear according to a second mapping relationship and the bearer identifier of the remote UE on the sidelink interface; the second mapping relationship being a mapping relationship between a sidelink interface bearer of the remote UE and a Uu interface backhaul link bear of the remote UE;
      in the downlink direction, receiving the adaptation layer PDU from the network device, determining the corresponding sidelink interface bearer according to the bearer identifier of the remote UE on the sidelink interface, and delivering the adaptation layer PDU to the RLC entity corresponding to the sidelink interface bearer;
      if the device is used in a network device, the processor is further configured to read program instructions in the memory and perform the following operations:
         in the uplink direction, determining, by the network device, the bearer identifier of the end-to-end bearer between the remote UE and the network device corresponding to the adaptation layer PDU according to a third mapping relationship and the bearer identifier of the remote UE on the sidelink interface included in the PDU header of the adaptation layer PDU, and determining a corresponding packet data convergence protocol (PDCP) entity; the third mapping relationship being a mapping relationship between the sidelink interface bearer of the remote UE and the end-to-end bearer between the remote UE and the network device;
         in the downlink direction, generating, by the adaptation layer of the network device, the adaptation layer PDU, and delivering the adaptation layer PDU to the corresponding RLC entity according to a fourth mapping relationship; the fourth mapping relationship being a mapping relationship between the end-to-end bearer between the network device and the remote UE and the Uu interface backhaul link bear of the remote UE.
Aspect 36. The device according to aspect 34, wherein, if the PDU header of the adaptation layer PDU at least includes: the identifier of the end-to-end bearer between the remote UE and the network device allocated by the network device to the remote UE:
   if the device is applied to a remote UE, the processor is further configured to read program instructions in the memory and perform the following operations:
   in the uplink direction, generating, by the adaptation layer of the remote UE, the adaptation layer PDU, and delivering the adaptation layer PDU to a corresponding RLC entity according to a sixth mapping relationship; the sixth mapping relationship being a mapping relationship between the end-to-end bearer between the network device and the remote UE and the sidelink interface bearer of the remote UE;
   in the downlink direction, receiving the adaptation layer PDU from the relay UE, and determining the corresponding PDCP entity according to the identifier of the end-to-end bearer between the remote UE and the network device allocated by the network device to the remote UE included in the PDU header of the adaptation layer PDU;
   if the device is applied to a relay UE, the processor is further configured to read program instructions in the memory and perform the following operations:
      in the uplink direction, receiving, by the relay UE, the adaptation layer PDU, and delivering the adaptation layer PDU to an RLC entity corresponding to the Uu interface backhaul link bear according to a seventh mapping relationshipe; the seventh mapping relationship being a mapping relationship between the sidelink interface bearer of the remote UE and the Uu interface backhaul link bear of the remote UE;
      in the downlink direction, receiving, by the relay UE, the adaptation layer PDU, and determining the corresponding sidelink interface bearer according to the identifier of the end-to-end bearer between the remote UE and the network device allocated by the network device to the remote UE and a ninth mapping relationship, and delivering the adaptation layer PDU to the RLC entity corresponding to the sidelink interface bearer; the ninth mapping relationship being a mapping relationship between the Uu interface backhaul link bear of the remote UE and the sidelink interface bearer of the remote UE;
      if the device is applied to a network device, the processor is further configured to read program instructions in the memory and perform the following operations:
         in the uplink direction, receiving the adaptation layer PDU from the relay UE, determining the corresponding PDCP entity according to the bearer identifier of the end-to-end bearer between the remote UE and the network device allocated by the network device to the remote UE included in the PDU header of the adaptation layer PDU;
         in the downlink direction, generating, by the adaptation layer of the network device, the adaptation layer PDU, and delivering the adaptation layer PDU to the corresponding RLC entity according to an eighth mapping relationship; the eighth mapping relationship being a mapping relationship between the end-to-end bearer between the network device and the remote UE and the Uu interface backhaul link bear of the remote UE.
Aspect 37. The device according to aspect 33, wherein the processor is further configured to read program instructions in the memory and perform the following operations:
   adding the end-to-end adaptation layer above the RLC layer of the relay UE and above the RLC layer of the network devices respectively.
Aspect 38. The device according to aspect 37, wherein, if the PDU header of the adaptation layer PDU at least includes: the bearer identifier of the remote UE on the sidelink interface:
   if the device is applied to a remote UE, the processor is further configured to read program instructions in the memory and perform the following operations:
   in the uplink direction, generating, by the remote UE, a PDCP PDU, and delivering the PDCP PDU to a corresponding RLC entity according to a tenth mapping relationship; the tenth mapping relationship being a mapping relationship between that the end-to-end bearer between the remote UE and the network device and the sidelink interface bear of the remote UE;
   in the downlink direction, receiving, by the remote UE, the RLC PDU, and determining the corresponding PDCP entity according to a fourteenth mapping relationship; the fourteenth mapping relationship being a mapping relationship between the sidelink interface bearer of the remote UE and the end-to-end bear between the remote UE and the network device;
   if the device is applied to the relay UE, the processor is further configured to read program instructions in the memory and perform the following operations:
      in the uplink direction, generating, by the relay UE, the adaptation layer PDU according to the PDCP PDU, and delivering the adaptation layer PDU to the corresponding RLC entity according to an eleventh mapping relationship; the eleventh mapping relationship being a mapping relationship between the sidelink interface bear of the remote UE and the Uu interface backhaul link bearer of the remote UE;
      in the downlink direction, receiving the adaptation layer PDU from the network device, removing an adaptation layer header of the adaptation layer PDU, and obtaining a to-be-processed data packet; determining the corresponding sidelink interface bearer according to the bearer identifier of the remote UE on the sidelink interface, and delivering the to-be-processed data packet to the RLC entity corresponding to the sidelink interface bearer;
      if the device is applied to the network device, the processor is further configured to read program instructions in the memory and perform the following operations:
         in the uplink direction, determining, by the network device, the bear identifier of the end-to-end bear between the remote UE and the network device corresponding to the adaptation layer PDU according to a twelfth mapping relationship and the bearer identifier of the remote UE on the sidelink interface included in the PDU header of the adaptation layer PDU, and determining the corresponding PDCP entity; the twelfth mapping relationship being a mapping relationship between the sidelink interface bearer of the remote UE and the end-to-end bearer between the remote UE and the network device;
         in the downlink direction, generating, by the adaptation layer of the network device, the adaptation layer PDU, and delivering the adaptation layer PDU to the corresponding RLC entity according to a thirteenth mapping relationship; the thirteenth mapping relationship being a mapping relationship between the end-to-end bearer between the network device and the remote UE and the Uu interface backhaul link bear of the remote UE.
Aspect 39. The device according to aspect 37, wherein if the PDU header of the adaptation layer PDU at least includes: the identifier of the end-to-end bearer between the remote UE and the network device allocated by the network device to the remote UE:
   if the device is applied to the remote UE, the processor is further configured to read program instructions in the memory and perform the following operations:
   in the uplink direction, generating, by the remote UE, the PDCP PDU, and delivering the PDCP PDU to the corresponding RLC entity according to a fifteenth mapping relationship; the fifteenth mapping relationship being a mapping relationship between the end-to-end bearer between the remote UE and the network device and the sidelink interface bearer of the remote UE;
   in the downlink direction, receiving, by the remote UE, the RLC PDU, determining the corresponding PDCP entity according to a nineteenth mapping relationship; the nineteenth mapping relationship being a mapping relationship between the sidelink interface bearer of the remote UE and the end-to-end bearer between the remote UE and the network device;
   if the device is applied to the relay UE, the processor is further configured to read program instructions in the memory and perform the following operations:
      in the uplink direction, generating, by the relay UE, the adaptation layer PDU according to the PDCP PDU, and delivering the adaptation layer PDU to the RLC entity corresponding to the Uu interface backhaul link bearer according to a sixteenth mapping relationship; the sixteenth mapping relationship being a mapping relationship between the sidelink interface bearer of the remote UE and the Uu interface backhaul link bearer of the remote UE;
      in the downlink direction, receiving, by the relay UE, the adaptation layer PDU, removing the adaptation layer header of the adaptation layer PDU, and obtaining a to-be-processed data packet; determining the sidelink interface bearer corresponding to the remote UE according to an eighteenth mapping relationship, and delivering the to-be-processed data packet to the RLC entity corresponding to the sidelink interface bearer; the eighteenth mapping relationship being a mapping relationship between the Uu interface backhaul link bearer of the remote UE and the sidelink interface bearer of the remote UE;
      if the device is applied to the network device, the processor is further configured to read program instructions in the memory and perform the following operations:
         in the uplink direction, determining the corresponding PDCP entity according to the identifier of the end-to-end bearer between the remote UE and the network device allocated by the network device to the remote UE and contained in the PDU header of the adaptation layer PDU sent by the relay UE;
         in the downlink direction, generating by the adaptation layer of the network device, the adaptation layer PDU, and delivering the adaptation layer PDU to the corresponding RLC entity according to a seventeenth mapping relationship; the seventeenth mapping relationship is a mapping relationship between the end-to-end bearer between the network device and the remote UE and the Uu interface backhaul link bear of the remote UE.
Aspect 40. The device according to aspect 29, wherein, for a UE-to-UE relay scenario, the processor is further configured to read program instructions in the memory and perform the following operations:
   establishing the end-to-end adaptation layer between the first remote UE and the second remote UE; or,
   establishing the end-to-end adaptation layer between the relay UE and the second remote UE.
Aspect 41. The device according to aspect 40, wherein the processor is further configured to read program instructions in the memory and perform the following operations:
   adding the end-to-end adaptation layer above the RLC layer of the first remote UE and above the RLC layer of the second remote UE respectively.
Aspect 42. The device according to aspect 41, wherein, if the device is applied to the first remote UE, the processor is further configured to read program instructions in the memory and perform the following operations:
   generating, by an adaptation layer of the first remote UE, an adaptation layer PDU, and determining a corresponding RLC entity when the adaptation layer PDU is transmitted between the first remote UE and the relay UE according to a twentieth mapping relationship; the twentieth mapping relationship being a mapping relationship between a sidelink end-to-end bearer between the first remote UE and the second remote UE and a sidelink interface bearer between the first remote UE and the relay UE;
   if the device is applied to the relay UE, the processor is further configured to read program instructions in the memory and perform the following operations:
      receiving, by the relay UE, the adaptation layer PDU, and determining the corresponding RLC entity when the adaptation layer PDU is transmitted between the relay UE and the second remote UE according to a twenty-first mapping relationship; the twenty-first mapping relationship being a mapping relationship between the sidelink interface bearer between the first remote UE and the relay UE and the sidelink interface bear between the relay UE and the second remote UE;
      if the device is applied to the second remote UE, the processor is further configured to read program instructions in the memory and perform the following operations:
         receiving, by the second remote UE, the adaptation layer PDU, and determining the corresponding the PDCP entity according to the end-to-end bearer identifiers of the first remote UE and the second remote UE on the sidelink interface included in the PDU header of the adaptation layer PDU.
Aspect 43. The device according to aspect 40, wherein the processor is further configured to read program instructions in the memory and perform the following operations:
   adding the end-to-end adaptation layer above the RLC layer of the relay UE and above the RLC layer of the second remote UE respectively.
Aspect 44. The device according to aspect 43, wherein, if the device is applied to the first remote UE, the processor is further configured to read program instructions in the memory and perform the following operations:
   generating, by the first remote UE, the PDCP PDU, and determining the RLC entity corresponding to the PDCP PDU according to a twenty-second mapping relationship; the twenty-second mapping relationship being a mapping relationship between the sidelink end-to-end bearer between the first remote UE and the second remote UE and the end-to-end bearer between the first remote UE and the relay UE;
   if the device is applied to the relay UE, the processor is further configured to read program instructions in the memory and perform the following operations:
      generating, by the relay UE, the adaptation layer PDU according to the PDCP PDU, and determining a corresponding RLC entity when the adaptation layer PDU is transmitted between the relay UE and the second remote UE according to a twenty-third mapping relationship; the twenty-third mapping relationship being a mapping relationship between the sidelink interface bear between the first remote UE and the relay UE and the sidelink interface bear between the relay UE and the second remote UE;
      if the device is applied to the second remote UE, the processor is further configured to read program instructions in the memory and perform the following operations:
         receiving, by the second remote UE, the adaptation layer PDU, and determining the corresponding PDCP entity according to the end-to-end bearer identifiers of the first remote UE and the second remote UE on the sidelink interface included in the PDU header of the adaptation layer PDU.
Aspect 45. A computer-readable storage medium for storing a computer program, when executed by a processor, implements the steps in the information transmission method according to any one of aspects 1 to 21.

## Claims

1. An information transmission method, comprising:
in a layer 2, L2, relay scenario, establishing (301) an end-to-end adaptation layer; wherein, a function of the end-to-end adaptation layer includes one or a combination of routing and bearer mapping;
wherein the method comprises:
for a UE-to-Network relay scenario, a protocol data unit, PDU, header of an adaptation layer PDU at least including: a bearer identifier of a remote UE on a sidelink interface, or an identifier of an end-to-end bearer between the remote UE and a network device allocated by the network device to the remote UE;
for a UE-to-UE relay scenario, the PDU header of the adaptation layer PDU at least including: end-to-end bearer identifiers of a first remote UE and a second remote UE on the sidelink interface.

2. The method according to claim 1, wherein,
the bearer identifier of the remote UE on the sidelink interface includes: a sidelink interface source L2 ID, a sidelink interface destination L2 ID, and a sidelink interface logical channel identifier; or, the bearer identifier of the remote UE on the sidelink interface includes: the sidelink interface source L2 ID, the sidelink interface destination L2 ID, and a sidelink interface bearer identifier;
the end-to-end bearer identifiers of the first remote UE and the second remote UE on the sidelink interface include: the sidelink interface source L2 ID, the sidelink interface destination L2 ID, and the sidelink interface logical channel identifier; or, the end-to-end bearer identifiers of the first remote UE and the second remote UE on the sidelink interface include: the sidelink interface source L2 ID, the sidelink interface destination L2 ID, and the sidelink interface bearer identifier.

3. The method according to claim 2, wherein the PDU header of the adaptation layer PDU further comprises a sidelink interface cast type identifier.

4. The method according to claim 1, wherein,
the identifier of the end-to-end bearer between the remote UE and the network device allocated by the network device to the remote UE includes: UE identification information allocated by the network device to the remote UE, an end-to-end logical channel identifier between the remote UE and the network device; or,
the identifier of the end-to-end bearer between the remote UE and the network device allocated by the network device to the remote UE includes: the UE identification information allocated by the network device to the remote UE, an end-to-end bearer identifier between the remote UE and the network device.

5. The method according to any one of claims 1-4, wherein, for a UE-to-Network relay scenario, the establishing an end-to-end adaptation layer includes:
establishing the end-to-end adaptation layer between the remote UE and the network device; or,
establishing the end-to-end adaptation layer between a relay UE and the network device.

6. The method according to claim 5, wherein the establishing the end-to-end adaptation layer between the remote UE and the network device comprises:
adding the end-to-end adaptation layer above a radio link control, RLC, layer of the remote UE and above an RLC layer of the network device.

7. The method according to claim 6, further comprising:
if the PDU header of the adaptation layer PDU at least includes: the bearer identifier of the remote UE on the sidelink interface:
in the uplink direction, generating, by the adaptation layer of the remote UE, the adaptation layer PDU, and delivering the adaptation layer PDU to a corresponding RLC entity according to a first mapping relationship; the first mapping relationship being a mapping relationship between the end-to-end bearer between the network device and the remote UE and the sidelink interface bearer of the remote UE;
receiving, by the relay UE, the adaptation layer PDU, and delivering the adaptation layer PDU to an RLC entity corresponding to a Uu interface backhaul link bearer according to a second mapping relationship and the bearer identifier of the remote UE on the sidelink interface; the second mapping relationship being a mapping relationship between a sidelink interface bearer of the remote UE and a Uu interface backhaul link bearer of the remote UE;
determining, by the network device, the bearer identifier of the end-to-end bearer between the remote UE and the network device corresponding to the adaptation layer PDU according to a third mapping relationship and the bearer identifier of the remote UE on the sidelink interface included in the PDU header of the adaptation layer PDU, and determining a corresponding packet data convergence protocol, PDCP, entity; the third mapping relationship being a mapping relationship between the sidelink interface bearer of the remote UE and the end-to-end bearer between the remote UE and the network device;
or
the method further includes:
If the PDU header of the adaptation layer PDU at least includes: the bearer identifier of the remote UE on the sidelink interface:
in the downlink direction, generating, by the adaptation layer of the network device, the adaptation layer PDU, and delivering the adaptation layer PDU to the corresponding RLC entity according to a fourth mapping relationship; the fourth mapping relationship being a mapping relationship between the end-to-end bearer between the network device and the remote UE and the Uu interface backhaul link bearer of the remote UE;
receiving, by the relay UE, the adaptation layer PDU, determining a corresponding sidelink interface bearer according to the bearer identifier of the remote UE on the sidelink interface, and delivering the adaptation layer PDU to the RLC entity corresponding to the sidelink interface bearer;
receiving, by the remote UE, the adaptation layer PDU, and determining the bearer identifier of the end-to-end bearer between the remote UE and the network device corresponding to the adaptation layer PDU according to a fifth mapping relationship and the bearer identifier of the remote UE on the sidelink interface included in the PDU header of the adaptation layer PDU, and determining a corresponding PDCP entity; the fifth mapping relationship being a mapping relationship between the sidelink interface bearer of the remote UE and the end-to-end bearer between the remote UE and the network device;
or
the method further includes:
if the PDU header of the adaptation layer PDU at least includes: the identifier of the end-to-end bearer between the remote UE and the network device allocated by the network device to the remote UE:
in the uplink direction, generating, by the adaptation layer of the remote UE, the adaptation layer PDU, and delivering the adaptation layer PDU to a corresponding RLC entity according to a sixth mapping relationship; the sixth mapping relationship being a mapping relationship between the end-to-end bearer between the network device and the remote UE and the sidelink interface bearer of the remote UE;
receiving, by the relay UE, the adaptation layer PDU, and delivering the adaptation layer PDU to an RLC entity corresponding to the Uu interface backhaul link bearer according to a seventh mapping relationship; the seventh mapping relationship being a mapping relationship between the sidelink interface bearer of the remote UE and the Uu interface backhaul link bearer of the remote UE;
receiving, by the network device, the adaptation layer PDU and determining the corresponding PDCP entity according to the identifier of the end-to-end bearer between the remote UE and the network device allocated by the network device to the remote UE included in the PDU header of the adaptation layer PDU;
or
the method further comprises:
if the PDU header of the adaptation layer PDU at least includes: the identifier of the end-to-end bearer between the remote UE and the network device allocated by the network device to the remote UE:
in the downlink direction, generating, by the adaptation layer of the network device, the adaptation layer PDU, and delivering the adaptation layer PDU to the corresponding RLC entity according to an eighth mapping relationship; the eighth mapping relationship being a mapping relationship between the end-to-end bearer between the network device and the remote UE and the Uu interface backhaul link bearer of the remote UE;
receiving, by the relay UE, the adaptation layer PDU, and determining the corresponding sidelink interface bearer according to the identifier of the end-to-end bearer between the remote UE and the network device allocated by the network device to the remote UE and a ninth mapping relationship, and delivering the adaptation layer PDU to the RLC entity corresponding to the sidelink interface bearer; the ninth mapping relationship being a mapping relationship between the Uu interface backhaul link bearer of the remote UE and the sidelink interface bearer of the remote UE;
receiving, by the remote UE, the adaptation layer PDU, and determining the corresponding PDCP entity according to the identifier of the end-to-end bearer between the remote UE and the network device allocated by the network device to the remote UE included in the PDU header of the adaptation layer PDU.

8. The method according to claim 5, wherein the establishing the end-to-end adaptation layer between the relay UE and the network device comprises:
adding the end-to-end adaptation layer above the RLC layer of the relay UE and above the RLC layer of the network devices respectively.

9. The method according to claim 8, further comprising:
if the PDU header of the adaptation layer PDU at least includes: the bearer identifier of the remote UE on the sidelink interface:
in the uplink direction, generating, by the remote UE, a PDCP PDU, and delivering the PDCP PDU to a corresponding RLC entity according to a tenth mapping relationship; the tenth mapping relationship being a mapping relationship between that the end-to-end bearer between the remote UE and the network device and the sidelink interface bearer of the remote UE;
generating, by the relay UE, the adaptation layer PDU according to the PDCP PDU, and delivering the adaptation layer PDU to the corresponding RLC entity according to an eleventh mapping relationship; the eleventh mapping relationship being a mapping relationship between the sidelink interface bearer of the remote UE and the Uu interface backhaul link bearer of the remote UE;
determining, by the network device, the bearer identifier of the end-to-end bearer between the remote UE and the network device corresponding to the adaptation layer PDU according to a twelfth mapping relationship and the bearer identifier of the remote UE on the sidelink interface included in the PDU header of the adaptation layer PDU, and determining the corresponding PDCP entity; the twelfth mapping relationship being a mapping relationship between the sidelink interface bearer of the remote UE and the end-to-end bearer between the remote UE and the network device;
or
the method further comprises:
if the PDU header of the adaptation layer PDU at least includes: the bearer identifier of the remote UE on the sidelink interface:
in the downlink direction, generating, by the adaptation layer of the network device, the adaptation layer PDU, and delivering the adaptation layer PDU to the corresponding RLC entity according to a thirteenth mapping relationship; the thirteenth mapping relationship being a mapping relationship between the end-to-end bearer between the network device and the remote UE and the Uu interface backhaul link bearer of the remote UE;
receiving, by the relay UE, the adaptation layer PDU, removing an adaptation layer header of the adaptation layer PDU, and obtaining a to-be-processed data packet; determining the corresponding sidelink interface bearer according to the bearer identifier of the remote UE on the sidelink interface, and delivering the to-be-processed data packet to the RLC entity corresponding to the sidelink interface bearer;
receiving, by the remote UE, the RLC PDU, and determining the corresponding PDCP entity according to a fourteenth mapping relationship; the fourteenth mapping relationship being a mapping relationship between the sidelink interface bearer of the remote UE and the end-to-end bearer between the remote UE and the network device;
or
the method further comprises:
if the PDU header of the adaptation layer PDU at least includes: the identifier of the end-to-end bearer between the remote UE and the network device allocated by the network device to the remote UE:
in the uplink direction, generating, by the remote UE, the PDCP PDU, and delivering the PDCP PDU to the corresponding RLC entity according to a fifteenth mapping relationship; the fifteenth mapping relationship being a mapping relationship between the end-to-end bearer between the remote UE and the network device and the sidelink interface bearer of the remote UE;
generating, by the relay UE, the adaptation layer PDU according to the PDCP PDU, and delivering the adaptation layer PDU to the RLC entity corresponding to the Uu interface backhaul link bearer according to a sixteenth mapping relationship; the sixteenth mapping relationship being a mapping relationship between the sidelink interface bearer of the remote UE and the Uu interface backhaul link bearer of the remote UE;
determining, by the network device, the corresponding PDCP entity according to the identifier of the end-to-end bearer between the remote UE and the network device allocated by the network device to the remote UE and contained in the PDU header of the adaptation layer PDU;
the method further comprises:
if the PDU header of the adaptation layer PDU at least includes: the identifier of the end-to-end bearer between the remote UE and the network device allocated by the network device to the remote UE:
in the downlink direction, generating by the adaptation layer of the network device, the adaptation layer PDU, and delivering the adaptation layer PDU to the corresponding RLC entity according to a seventeenth mapping relationship; the seventeenth mapping relationship is a mapping relationship between the end-to-end bearer between the network device and the remote UE and the Uu interface backhaul link bearer of the remote UE;
receiving, by the relay UE, the adaptation layer PDU, removing the adaptation layer header of the adaptation layer PDU, and obtaining a to-be-processed data packet; determining the sidelink interface bearer corresponding to the remote UE according to an eighteenth mapping relationship, and delivering the to-be-processed data packet to the RLC entity corresponding to the sidelink interface bearer; the eighteenth mapping relationship being a mapping relationship between the Uu interface backhaul link bearer of the remote UE and the sidelink interface bearer of the remote UE;
receiving, by the remote UE, the RLC PDU, determining the corresponding PDCP entity according to a nineteenth mapping relationship; the nineteenth mapping relationship being a mapping relationship between the sidelink interface bearer of the remote UE and the end-to-end bearer between the remote UE and the network device.

10. The method according to claim 1, wherein, for the UE-to-UE relay scenario, the establishing an end-to-end adaptation layer comprises:
establishing the end-to-end adaptation layer between the first remote UE and the second remote UE; or,
establishing the end-to-end adaptation layer between the relay UE and the second remote UE.

11. The method according to claim 10, wherein the establishing the end-to-end adaptation layer between the first remote UE and the second remote UE comprises:
adding the end-to-end adaptation layer above the RLC layer of the first remote UE and above the RLC layer of the second remote UE respectively,
wherein the method further comprises:
generating, by an adaptation layer of the first remote UE, an adaptation layer PDU, and determining a corresponding RLC entity when the adaptation layer PDU is transmitted between the first remote UE and the relay UE according to a twentieth mapping relationship; the twentieth mapping relationship being a mapping relationship between a sidelink end-to-end bearer between the first remote UE and the second remote UE and a sidelink interface bearer between the first remote UE and the relay UE;
receiving, by the relay UE, the adaptation layer PDU, and determining the corresponding RLC entity when the adaptation layer PDU is transmitted between the relay UE and the second remote UE according to a twenty-first mapping relationship; the twenty-first mapping relationship being a mapping relationship between the sidelink interface bearer between the first remote UE and the relay UE and the sidelink interface bearer between the relay UE and the second remote UE;
receiving, by the second remote UE, the adaptation layer PDU, and determining the corresponding the PDCP entity according to the end-to-end bearer identifiers of the first remote UE and the second remote UE on the sidelink interface included in the PDU header of the adaptation layer PDU.

12. The method according to claim 10, wherein the establishing the end-to-end adaptation layer between the first remote UE and the second remote UE comprises:
adding the end-to-end adaptation layer above the RLC layer of the relay UE and above the RLC layer of the second remote UE respectively,
the method further comprises:
generating, by the first remote UE, the PDCP PDU, and determining the RLC entity corresponding to the PDCP PDU according to a twenty-second mapping relationship; the twenty-second mapping relationship being a mapping relationship between the sidelink end-to-end bearer between the first remote UE and the second remote UE and the end-to-end bearer between the first remote UE and the relay UE;
generating, by the relay UE, the adaptation layer PDU according to the PDCP PDU, and determining a corresponding RLC entity when the adaptation layer PDU is transmitted between the relay UE and the second remote UE according to a twenty-third mapping relationship; the twenty-third mapping relationship being a mapping relationship between the sidelink interface bearer between the first remote UE and the relay UE and the sidelink interface bearer between the relay UE and the second remote UE;
receiving, by the second remote UE, the adaptation layer PDU, and determining the corresponding PDCP entity according to the end-to-end bearer identifiers of the first remote UE and the second remote UE on the sidelink interface included in the PDU header of the adaptation layer PDU.

13. An information transmission device (2100), comprising:
an establishing module (2101), configured to establish an end-to-end adaptation layer in an L2 relay scenario; wherein, a function of the adaptation layer includes one or a combination: routing, bearer mapping;
wherein, for a UE-to-Network relay scenario, a protocol data unit, PDU, header of an adaptation layer PDU at least includes: a bearer identifier of a remote UE on a sidelink interface, or an identifier of an end-to-end bearer between the remote UE and a network device allocated by the network device to the remote UE;
for a UE-to-UE relay scenario, the PDU header of the adaptation layer PDU at least includes: end-to-end bearer identifiers of a first remote UE and a second remote UE on the sidelink interface.

14. The device according to claim 13, wherein, the bearer identifier of the remote UE on the sidelink interface includes: a sidelink interface source L2 ID, a sidelink interface destination L2 ID, and a sidelink interface logical channel identifier; or, the bearer identifier of the remote UE on the sidelink interface includes: the sidelink interface source L2 ID, the sidelink interface destination L2 ID, and a sidelink interface bearer identifier;
the end-to-end bearer identifiers of the first remote UE and the second remote UE on the sidelink interface include: the sidelink interface source L2 ID, the sidelink interface destination L2 ID, and the sidelink interface logical channel identifier; or, the end-to-end bearer identifiers of the first remote UE and the second remote UE on the sidelink interface include: the sidelink interface source L2 ID, the sidelink interface destination L2 ID, and the sidelink interface bearer identifier,
wherein,
the identifier of the end-to-end bearer between the remote UE and the network device allocated by the network device to the remote UE includes: UE identification information allocated by the network device to the remote UE, an end-to-end logical channel identifier between the remote UE and the network device; or,
the identifier of the end-to-end bearer between the remote UE and the network device allocated by the network device to the remote UE includes: the UE identification information allocated by the network device to the remote UE, an end-to-end bearer identifier between the remote UE and the network device,
wherein, for a UE-to-Network relay scenario, the establishing module is further configured to:
establish the end-to-end adaptation layer between the remote UE and the network device; or,
establish the end-to-end adaptation layer between a relay UE and the network device,
wherein, for a UE-to-UE relay scenario, the establishing module is further configured to:
establishing the end-to-end adaptation layer between a first remote UE and a second remote UE; or,
establishing the end-to-end adaptation layer between a relay UE and the second remote UE.
